# EUROPEAN PATENT SPECIFICATION

(11) **EP 1 066 613 B1**
(45) Date of publication and mention of the grant of the patent: **14.03.2007**
(21) Application number: 99914215.1
(22) Date of filing: 26.03.1999
(51) Int. Cl.: G09F 3/10

(54) **PRESSURE-SENSITIVE ADHESIVE CONSTRUCTIONS**
DRUCKEMPFINDLICHE KLEBESCHICHTKONSTRUKTIONEN
CONSTRUCTIONS AUTOCOLLANTES

(30) Priority: 27.03.1998 US 49376
(43) Date of publication of application: 10.01.2001
(73) Proprietor: AVERY DENNISON CORPORATION, Pasadena, CA 91103 (US)
(72) Inventor: SCHOLZ, William, F., Altadena, CA 91001 (US); SU, Eric, Chen-nan, Mentor, OH 44060 (US); CONTI, Norman, A., Painesville, OH 44077 (US); SCHUT, Johannes, NL-2402 SP Alphen aan den Rijn (NL); SCANLAN, David J., Hermosa Beach, CA 90254 (US); VARGAS, Steven, J., Glendale, CA 91201 (US); UGOLICK, Ronald, San Dimas, CA 91773 (US); MENDEZ, Jose, Luis, Baldwin Park, CA 91706 (US); SUN, Edward, I., Arcadia, CA 91006 (US)
(74) Representative: Kirkham, Nicholas Andrew
(86) International application number: PCT/US1999/006731
(87) International publication number: WO 1999/049440

(56) References cited:
- EP-A- 0 492 942
- WO-A-92/08429
- US-A- 4 713 273
- US-A- 5 186 782
- US-A- 5 302 431
- US-A- 5 700 571

## Description

### FIELD OF THE INVENTION

The present invention relates to pressure-sensitive adhesive constructions used for making labels, signs, decals and the like and, more particularly, to highly-conformable, cost effective pressure-sensitive adhesive constructions. Such a PSA construction comprises a prelaminate construction having a thin nonblocking printable continuous film disposed onto a layer of a pressure-sensitive adhesive, which prelaminate construction optionally may be overlaminated after printing of the prelaminate construction and/or overlaminated film.

### BACKGROUND OF THE INVENTION

Pressure-sensitive adhesive (PSA) constructions such as labels, tapes, decals and the like are known in the art. For example, PSA label constructions have commonly been used to apply a particular facestock having a specific nature of printing to an object or article. PSA label constructions typically comprise a release liner, a PSA layer disposed onto the liner, and a self supporting, preformed facestock laminated onto the PSA layer. This lamination may be formed by first coating or laminating the PSA to the liner, then laminating the facestock onto the PSA-coated liner; or alternatively by coating or laminating the PSA to the facestock, then the PSA-coated facestock onto the liner. The self supporting, preformed facestock is characteristically made from a web or sheet of paper, cardboard or plastic, which is printed on with information or other indicia either before or after it is laminated to the PSA and liner. In a typical process of "converting" the facestock/PSA/liner laminate, the facestock is printed, facestock and adhesive die-cut down to the liner surface to outline the label shape, and the waste material between the labels (matrix) is optionally stripped out. The PSA label facestock and adhesive is then adhered to a substrate surface by separating the label from the liner and causing the PSA layer of the label to come into contact with the substrate surface. In the most popular automatic labeling process, the label is separated from the liner by bending the liner back over a peel plate, whereupon the label is sufficiently stiff to cause the label to continue on a straight path toward the desired substrate surface.

As used in this patent application, "separation" refers to removal of the label from the liner, "application" refers to adhesion of the label to the substrate surface, and "dispensing" or "dispensability" refers to the combined steps of separation and application. "Peel plate dispensing" denotes the use of a peel plate in the separation of liner from label.

The present patent application uses the term "faceless" pressure sensitive adhesive constructions to contrast the manufacturing methods disclosed herein from conventional PSA label construction manufacturing methods. As discussed above, in conventional manufacture of PSA label materials, a self supporting preformed web or sheet is laminated to a PSA ("preformed" means that the facestock had been formed into a self supporting web or sheet in a previous manufacturing process, and in the case of a liquid or molten facestock material, that the material has been dried or hardened). In the present invention, in contrast, the facestock web or sheet is formed in situ from a film-forming material (herein called an FFM), forming a continuous printable film layer. The web or sheet is applied to the PSA at the time at which the continuous printable film layer is formed by coating into a sheet or web.

In the manufacture and production of PSA constructions, a substantial amount of the overall cost involved is attributed to the material costs for its component material layers, e.g., the PSA and the facestock, be it paper, cardboard, or plastic. The layer thickness and layer materials used to form such conventional PSA constructions have been selected to provide desired properties of convertibility, e.g., by conventional converting techniques such as by die-curring and matrix-stripping; dispensability, e.g, by conventional dispensing equipment such as by peel plate; and conformability, e.g., enabling the applied label to adhere to an irregular or deformable substrate surface without becoming detached or damaged.

It is known that the stiffness of a PSA construction will affect its convertibility and dispensability. As a rule of thumb, as the construction stiffness is increased so is convertibility and dispensability of the construction. However, the conformability of a PSA construction is known to decrease as the construction stiffness is increased. Thus, the objective stiffness for a PSA construction is a compromise between convertibility/dispensability and conformability. This compromise does not present a problem when designing a PSA construction for an end use that does not require a high degree of conformity, such as a permanently flat surface. In such uses, the layer thickness and material choice is simply tailored to meet the desired convertibility/dispensability and application criteria. This compromise does, however, present a problem when the construction application calls for conformability.

Prior art PSA constructions having a Gurley stiffness of at least 10 mg, and more commonly of at least 20 mg or greater are known and are described in U.S. Patent Nos. 5,186,782, 5,16,393 ; 4,713,273; and 5,541,283. The '782 and '283 parents exploited the idea that a proper differential between machine direction stiffness and cross dimension stiffness, with the latter being the lower of the two, could enable a heat-set film to be dispensed at high speeds, yet be suitable for flexible-film applications. Such label film might exhibit acceptable overall conformability to flexible substrates even though the film has less inherent conformability than the then standard polymer labels based on polyvinyl chloride (PVC). The present invention provides a further breakthrough in the balance between dispensability and conformability, and achieves relatively low stiffness, yet conventionally dispensable labels which are well suited to applications calling for a high degree of conformability.

US-A-5 302 431 discloses a discloses deformable Label. EP-A-0 492 942 discloses an oriented polymeric microporous film.

Specific end uses calling for highly-conformable PSA constructions include those where the label is to be adhered to a small-diameter contoured surface or irregular surface. In such an end use, unnecessary construction stiffness or rigidity could interfere with the label's ability to conform and remain adhered to the underlying substrate surface. Additionally, these conventional PSA constructions are not manufactured in a most economically efficient manner.

Additionally, conventional PSA label constructions are not well suited for specific uses such as label uses where the label and underlying substrate are subjected to particular process conditions. For example, conventional PSA label constructions comprising a paper facestock and/or lacking necessary properties of conformability are known to be adversely affected when used on glass beverage bottles, during the washing/rinsing, filling and pasteurization process, due not only to the decomposition of the paper facestock itself but to the failure of the PSA to remain adhered to the substrate surface. It is believed that such label lifting can be attributed to the rigidity or stiffness of such conventional PSA labels that, once the PSA is heated, causes the label and PSA to peel away and lift from the substrate surface. In this instance, to avoid damage to the paper label, the paper labels are applied to a bottle after it has been rinsed, filled, and pasteurized, i.e., the label is "post applied". Generally, printed paper labels are post applied to filled bottles using aqueous adhesives or hot melt adhesives.

If post-applied paper labels are not completely adhered to the bottle, are misaligned on the bottle, or are otherwise incorrectly applied to the filled bottle, then the entire bottle and contents will be unusable and must be discarded. Thus, it is desired that glass bottles be labeled and inspected prior to being filled and pasteurized to eliminate defective bottles or labels.

It is known in the art to use certain high-performance acrylic PSAs to pre-apply plastic labels to glass bottles following bottle formation at a bottle manufacturing plant. Examples include Optiflex^{™} labels available from FLEXcon Europe, Weesp Holland; and Primeline^{™} label films available from Polykote Corporation, Westminster PA. While these labels can generally withstand the bottle washing/rinsing, filling, and pasteurization operations at a bottle filling plant, they make use of specialized adhesives, such as solvent or emulsion acrylics, that are economically undesirable from a manufacturing perspective, making them an unattractive option when compared to conventional gum-type labels.

It is, therefore, desired to provide a PSA construction for use as a label, sign, decal and the like in a manner that avoids the need to use a conventional facestock formed from paper, cardboard or plastic. It is desired that the printed message or indicia of such construction be protected from damage that can be caused by contact with adjacent physical objects or by exposure to moisture, weather and the like. It is desired that the PSA label construction be convertible by die-cutting and matrix-stripping methods at high speeds, be readily separable for dispensing by conventional peel plate equipment, and be highly conformable. It is further desired that certain embodiments of such PSA construction be capable of withstanding rinsing, filling, and pasteurization operations when applied to a glass beverage bottle to permit its use as a pre-applied label. It is also desired that the PSA label construction be manufactured in an economically efficient manner when compared to conventional PSA constructions.

### SUMMARY OF THE INVENTION

"Faceless" pressure sensitive adhesive constructions of the present invention are produced using a manufacturing process which provides significant advantages in comparison to conventional PSA label construction manufacturing methods. In the conventional manufacturing process for PSA label constructions, a self supporting preformed facestock is laminated to a PSA. In the present invention, in contrast, a facestock web or sheet is formed in situ from a film-forming material (herein called an FFM), resulting in a continuous printable film layer. The continuous film layer is laminated to the PSA at the time at which the continuous film layer is formed by coating the FFM to form a sheet or web.

In a first (simultaneous coating) embodiment, the FFM and PSA layers are formed simultaneously and the two layers are coated together onto a release liner. In a second (sequential coating) embodiment, the PSA is coated onto a release liner, and then the FFM is coated onto the PSA layer in line.

The faceless manufacturing process of the invention can be used to form a PSA web or sheet with a self supporting continuous film layer, or alternatively can be used to form a PSA construction with a continuous film layer which is not in itself self supporting. A major advantage of the present invention is avoiding the need to handle a preformed facestock prior to lamination to the PSA layer with a supporting release liner. In the case of very thin, low stiffness continuous film layers, this feature allows the production of laminates which cannot practically be produced using conventional lamination techniques.

Another significant advantage is seen in the case of simultaneous or nonsimultaneous deposition of a PSA and a printable FFM from hot melts. In this case, the invention provides a technique for forming a thin label construction of a low caliper printable film laminated to a hot melt PSA, resulting in a PSA label construction which is not currently available using conventional manufacturing processes.

In a preferred embodiment of the invention, a prelaminate PSA construction of the type described above is overlaminated with a film, preferably a clear or translucent film. Overlaminated PSA constructions of this invention comprise a prelaminate PSA construction having a layer of pressure-sensitive material disposed on a release surface of a removable substrate, and a nonblocking non-paper continuous film FFM over a surface of the layer of pressure-sensitive adhesive. This prelaminate PSA construction is provided with an overlaminate film layer disposed over the nonblocking continuous film, and a printed indicia interposed between the nonblocking continuous film and overlaminate film layer. The prelaminate PSA construction is a highly conformable, low material cost, thin construction, having a thickness (excluding the removable substrate) in the range of from about 6 to 250 micrometers (mm), more preferably in the range of from about 20 to 75 mm, and having a Gurley stiffness of less than about 25 mg. For applications calling for a high degree of conformability, the prelaminate PSA construction can be designed having Gurley stiffness of less than about 10 mg, and in some instances less than about 5 mg.

It is to be understood that the independent layers of the FFM and the PSA performed different functions. The PSA serves to anchor the construction to the substrate. The thickness of the PSA that is used is a function of the aggressiveness of the PSA and the desired level of adhesion. For a given level of adhesion, less of an aggressive adhesive, i.e., lower thickness, is needed than for less aggressive adhesive. The thickness of the FFM contributes primarily to the stiffness or conformability of the overall construction. If a relatively stiff construction is needed, the FFM can be made thicker, or alternatively a FFM with a higher modulus can be used at the same thickness. Ideally, the overall thickness of the prelaminate construction is such that there is sufficient adhesive for adhesion to the substrate and sufficient FFM for the construction stiffness.

Because the continuous film layer provides the prelaminate construction with a tack free surface, the prelaminate construction can be collected into a self wound roll or a stack of sheets, and later printed and overlaminated at a separate manufacturing area or geographic location. For example, the prelaminate construction can be produced by a different manufacturing entity than that which prints and overlaminates this construction. A thin, low cost prelaminate construction provides printability and adhesive properties, while the overlaminating film can be chosen to have properties appropriate to converting, dispensing, and end use requirements, such as thickness and stiffness; vapor transmission; visual effects; etc.

The continuous FFM and (where applicable) overlaminate film layers are each selected from the group of films and film-forming polymers selected from the group including, but not limited polyolefins such as polypropylene, ethylene copolymer, polyethylene, polyvinylchloride, polyamide resins, polyester resins, polyurethane resins, varnishes, polyacrylate resins, vinyl acetate resins, vinyl acetate copolymers and vinyl acetates such as ethylene vinyl acetate (EVA) and ethylene methyl acrylate (EMA), ethylene methacrylic acid (EMAA), copolymers and mixtures thereof. In the PSA construction of the preferred embodiment, which is dispensable by conventional means, the continuous film layer comprises a thin, highly conformable, printable material. The overlaminated construction, i.e.. the continuous film layer in combination with the overlaminating film, has the stiffness needed for converting and dispensing, preferably using peel plate dispensing techniques.

The continuous film can be applied sequentially or simultaneously with the pressure-sensitive adhesive. For purposes of simultaneous application, the continuous film and PSA layer should be formed from materials which are compatible with the simultaneous coating technique employed. For example, the FFM can be formed from a material having a hot melt viscosity (at an elevated coating temperature) that is compatible with the viscosity of a hot melt PSA. For simultaneous application as a hot melt by die methods it is desirable that the FFM used to form the continuous film layer have a viscosity range that is within a factor of about 0.07 to 15 times that of the viscosity range for the PSA material within a shear rate range of from 200 to 10.000 s⁻¹ at a given coating temperature, e.g., approximately 175° C.

When it is desired to employ different processes for coating the PSA and FFM. sequential in-line coating methods may be employed. For example, an aqueous PSA may be coating onto a liner and dried, then a hot melt FFM may be deposited onto the dried PSA and cured to form a continuous printable film layer.

The overlaminated film layer can be laminated to the prelaminate PSA construction by pressure, when in the form of a continuous preformed film having a layer of adhesive material interposed between the continuous film and overlaminated film layers. The overlaminated film layer can be laminated to the prelaminate faceless PSA construction by heat and pressure, when either the continuous film or the overlaminate film is formed from a material that when heat activated forms its own adhesive surface for lamination. Alternatively, the overlaminated film layer can be applied by extrusion or coating technique to the prelaminate PSA construction as a film-forming material that subsequently cures to form a continuous film. The label construction printing indicia can be disposed on nonblocking continuous film surface and/or on a backside surface of the overlaminate film layer. The overlaminated film is preferably permanently adhered to the prelaminate PSA construction. However, for certain type of applications, the overlaminate film can be removably adhered to the underlying prelaminate PSA construction.

Overlaminated PSA constructions of this invention retain the high degree of conformity provided by the low cost prelaminate PSA construction, while building sufficient stiffness into the construction without the use of a conventional paper, cardboard or plastic facestock to promote high-speed convertibility by die-cutting and matrix-stripping methods, and dispensing by peel plate equipment. Overlaminate PSA constructions of this invention have a Gurley stiffness of less than about 40 mg. For applications calling for a high degree of conformability, the overlaminated PSA construction can be designed having Gurley stiffness of less than about 20 mg, and preferably less than 10 mg, and in some instances in the range of from about 3 to 8 mg.

Overlaminated PSA constructions of this invention provide a permanent or removable transparent coating or film over the printed indicia to protect it from damage caused by physical contact with adjacent objects, and damage caused by exposure to moisture, water or weather. The transparent coating or film enhances the optical qualities of the underlying printed indicia to provide a glossier and richer image. PSA constructions of this invention are uniquely suited for use as labels on substrates subjected to subsequent liquid processing, e.g., bottle washing/rinsing, filling and pasteurization, or liquid immersion, e.g., ice bath, without displaying adverse consequences such as label lifting or hazing.

### BRIEF DESCRIPTION OF THE DRAWINGS

These and other features and advantages of the present invention will become appreciated as the same becomes better understood with reference to the specification, claims and drawings wherein:
FIG. 1 is semi-schematic side elevation of a method of manufacturing a conventional prelaminate PSA label construction;
FIG. 2 is a semi-schematic side elevation of a method of applying a conventional facestock to the PSA label construction of FIG. 1 to form a laminated PSA label construction :
FIG. 3 is a semi-schematic side elevation of a method of converting the laminated PSA label construction of FIG. 2;
FIG. 4 is a cross-sectional side view of a prelaminate PSA label construction prepared according to principles of the invention;
FIG. 5 is a semi-schematic side elevation of a first method making the prelaminate PSA label construction of FIG. 4;
FIG. 6 is a semi-schematic side elevation of a second method of making the prelaminate PSA label construction of FIG. 4;
FIG. 7 is a semi-schematic side elevation of a method for heat treating a continuous film material layer of the prelaminate PSA label construction of FIG. 4;
FIG. 8 is a cross-sectional side view of a first embodiment overlaminated PSA label construction prepared according to principles of the invention;
FIG. 9 is a cross-sectional side view of a second embodiment overlaminated PSA label construction prepared according to principles of the invention;
FIG. 10 is a cross-sectional side view of a third embodiment overlaminated PSA label construction prepared according to principles of the invention;
FIG. 11 is a cross-sectional side view of a fourth embodiment overlaminated PSA label construction prepared according to principles of the invention;
FIG. 12 is a semi-schematic side elevation of a first method of making overlaminated PSA label constructions of this invention;
FIG. 13 is a semi-schematic side elevation of a second method of making overlaminated PSA label constructions of this invention;
FIG. 14 is a graph illustrating viscosity v. shear rate curves for example hot melt pressure-sensitive adhesives within a specific shear rate window;
FIG. 15 is a graph illustrating a viscosity v. shear rate curves for exemplary film-forming materials within a specific shear rate window that are suitable for simultaneous application with specific pressure-sensitive hot melt adhesives;
FIG. 16 is a schematic diagram of a dual die useful for applying PSA and FFM materials for the construction of FIG. 4;
FIG. 17 is a cross-sectional schematic view showing the lip structure of the dual die of FIG. 16 as it is applying a layer of PSA and a layer of FFM;
FIG. 18 is a cross-sectional schematic view showing an angled lip structure of the dual die of FIG. 16 as it is applying a layer of PSA and a layer of FFM; and
FIG. 19 is a cross-sectional schematic view of a dual die featuring a beveled lip structure.

### DETAILED DESCRIPTION OF THE INVENTION

The present invention is directed to thin, printable, convertible, dispensable and conformable PSA constructions which do not have a conventional preformed facestock formed from paper, cardboard, or plastic laminated to a PSA layer. PSA constructions of this invention generally comprise a first flexible substrate, a layer of releasable material disposed on a surface of the flexible substrate, a PSA disposed on the layer of releasable material, and a thin continuous printable film disposed onto a surface of the PSA layer.

In a preferred embodiment of the invention, the PSA construction further includes an overlaminate film layer disposed onto the thin continuous film layer, and printing indicia interposed between the continuous film layer and overlaminate film layer. The overlaminate PSA constructions of the preferred embodiment make use of a thin, low cost, printable prelaminate construction that is subsequently overlaminated to produce a PSA construction that is convertible at high speeds, that is dispensable using conventional peel plate dispensing equipment, and that has a high degree of conformability making it uniquely suited for PSA label applications previously not thought possible. For example, PSA constructions of this invention can be pre-applied to glass bottles, prior to washing/rinsing, filling and pasteurization processes, without adverse consequences. The design of the prelaminate PSA construction avoids the need to use a conventional preformed facestock, reduces the material costs associated with using conventional facestock materials, and reduces manufacturing time associated with forming a printable label stock. The overlaminated construction provides a label having a protective surface to minimize or eliminate damage to the printed surface caused by physical contact or exposure to moisture, weather and the like.

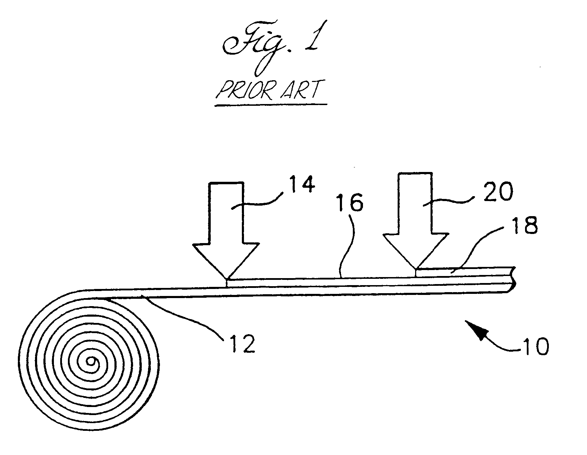

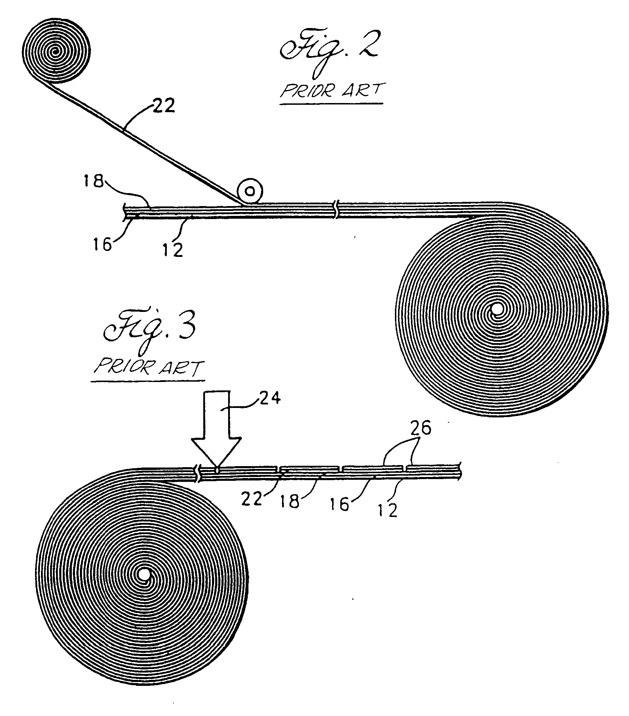

FIG. 1 illustrates a conventional prelaminate PSA label construction 10 comprising a liner stock 12 having disposed thereon at station 14 a layer of releasable material 16, forming a release liner. Alternatively, a release liner comprising a liner stock with releasable surface can be used. A PSA layer 18 is disposed on the layer of the releasable material 16 at station 20. Referring to FIG. 2, a conventional preformed facestock 22, in sheet stock or roll stock form made from paper, cardboard, plastic and the like, is disposed on a surface of the PSA layer 18 to form a completed conventional PSA label construction. Typically, the release liner 16 and PSA layer 18 are laminated together with the facestock 22 during a single process, e.g., by a roll coating and lamination process or by a die coating and lamination process. As illustrated in FIG. 2, the facestock 22 is laminated to the PSA layer 16 sequentially, after the PSA layer is applied to the liner 12.

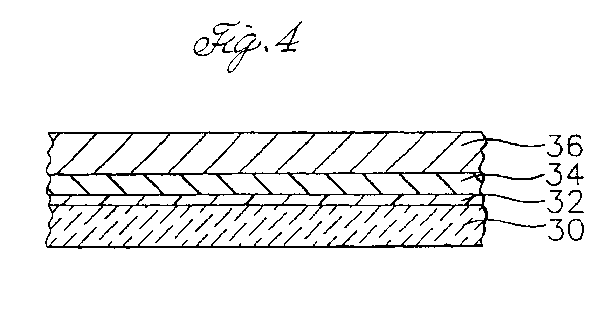

Such a conventional PSA label construction is printed, optionally overlaminated, cut and stripped, e.g., by conventional die-cutting and matrix-stripping methods, to form the desired shape and size label. Thus, for example, FIG. 3 illustrates the die-cutting of the facestock 22 at a station 24 into a series of PSA labels 26 of desired shape and size, carried by the release liner 16.

For purposes of reducing material costs and manufacturing time, and increasing PSA construction application flexibility, PSA constructions of this invention are constructed without using a conventional preformed facestock, yet they can be converted at high speeds and dispensed by conventional peel plate equipment. Instead, the PSA constructions of the invention make use of a thin, highly conformable, printable "faceless" prelaminate PSA construction. In a preferred embodiment of the invention, this prelaminate construction is printed and overlaminated to form the final PSA construction.

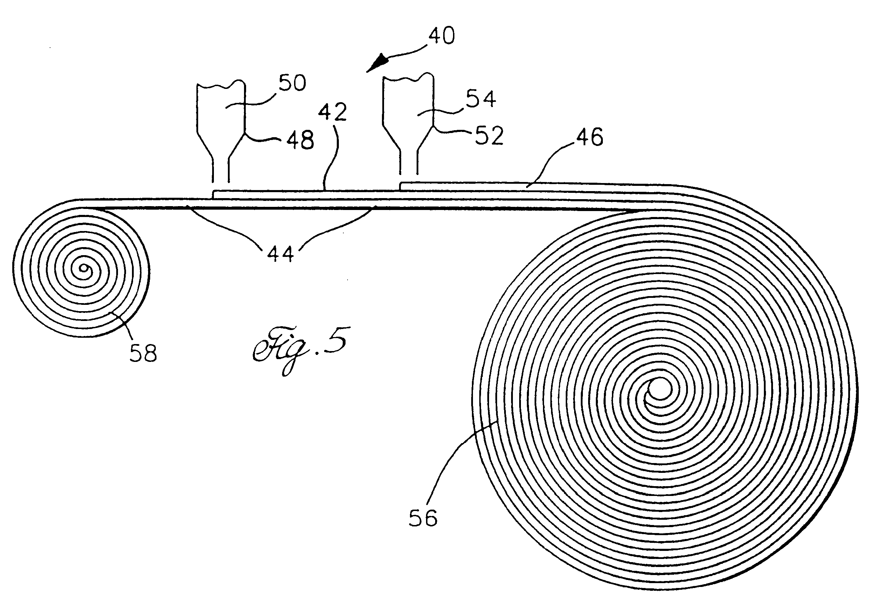

FIG. 4 illustrates an example faceless prelaminate PSA construction 28 useful for forming overlaminated PSA constructions of this invention. It is to be understood that the relative thicknesses of each of the material layers illustrated in FIG. 4, and in all of the drawing figures, are not intended to be to scale and are only provided for purposes of reference and clarity. Overlaminate PSA construction comprises a substrate 30 and a layer of releasable material 32 disposed on a surface of the substrate 30. It is to be understood that the substrate 30 may be in the form of any material suitable to act as a carrier for the construction. Preferred substrates include flexible materials in the form of sheet stock or roll/web stock. A particularly preferred substrate is a web stock in the form of a liner having a release material disposed thereon, thereby forming a release liner.

In a preferred embodiment of the invention, the release liner is paper. Such a paper liner is commercially available from, for example. Wausau-Mosinee Paper Corporation of Rhinelander, Wisconsin under the product name Rhi-Liner 12, having a thickness of about 65 mm and a 42 pound per ream basis weight. Alternatively, other types of release liners can be used depending on the particular final PSA label application and the coating technique employed. For example, for PSA label end uses calling for a high degree of optical clarity, film release liners may be employed. Faceless prelaminate PSA constructions of this invention have been formed with release liners of polyethylene terepthalate (Hoechst Diafoil Company, Greer, South Carolina), and polypropylene (Ultraliner brand liner from Avery Dennison Corporation, Concord, Ohio; U.S. Patent No. 5,143,570), provided that polypropylene liners may be unsuitable for prelaminate constructions produced using hot melt coating techniques.

Suitable releasable materials 32 include those materials with a low surface free energy that have a low affinity for the PSA, thereby allowing the PSA to be peeled away without cohesive failure. Preferred releasable materials are selected from the group of silicone-containing materials. A wide variety of thermal-activatable or actinic-activatable silicone-containing materials can be used to form the layer 32 of releasable material on paper release liners.

A layer of PSA 34 is disposed on a layer of the releasable material 32, and a layer of a film-forming material (FFM) 36 is disposed on a surface of the PSA layer 34. The PSA layer 34 has a body portion and has a surface portion that is disposed immediately adjacent the layer of FFM 36. The FFM layer 36 renders the underlying PSA layer 34 tack free, thereby forming a nonblocking faceless prelaminate PSA construction that enables subsequent handling or treatment of the prelaminate construction without it adhering to itself or to any other adjacent surface. The tack-free surface is designed to receive printing indicia directly thereon.

The FFM layer 36 is in the form of a continuous film that completely covers the underlying PSA layer, and renders the faceless prelaminate PSA construction completely nonblocking up to a minimum temperature of at least 50°C, and in some instances up to about 70°C, for a 24 hour period under a pressure of about 40 kPa. It is desired that prelaminate PSA constructions of this invention display such nonblocking characteristics so that if collected before further processing, by roll or stack method, they can be easily removed or separated from contiguous layers without causing the release liner to be pulled free of the PSA layer. The use of the releasable material on the release liner allows the release liner to be easily removable from the PSA layer to facilitate attachment of the overlaminated PSA construction to a desired article. Adhesive interference or blocking between the FFM and an adjacent backside surface of the release liner, when the prelaminate PSA is collected before further processing, is not desired because it results in the release liner being pulled away from the PSA layer during the removal or separation operation, thereby rendering the prelaminate PSA construction useless.

It is desired that the FFM layer be formed from a material that is capable of being used with a variety of conventional PSAs, including silicone-based PSAs, rubber-based PSAs, and acrylic-based PSAs, without interfering with the desired performance characteristics of the PSA. PSAs useful in forming PSA constructions of this invention include those that are conventionally used in forming PSA constructions, such as rubber-based, silicone-based, and acrylic-based PSAs.

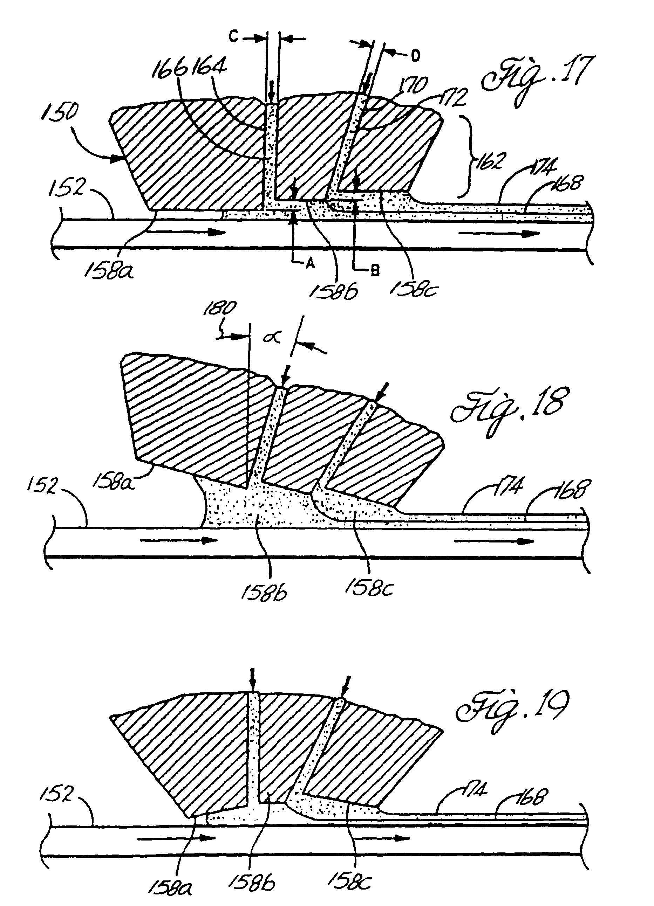

PSAs useful in forming PSA constructions according to principles of this invention can include, but are not limited to rubber based hot melt PSA, and emulsion and solvent acrylic-based PSAs. Suitable hot melt PSAs include those having a Brookfield viscosity in the range of from about 5 Pa*s to 40 Pa*s (50 to 400 Poise) at a low shear rate of less than approximately one reciprocal-second (1 s⁻¹) and at a coating temperature of about 175°C. Hot melt PSAs having a Brookfield viscosity in this range at these coating conditions are desired because they are easily pumped, and can be applied using conventional coating methods. Hot melt PSAs having a Brookfield viscosity of less than about 5 Pa*s at such above-defined coating conditions are not desirable because of the difficulty of matching the viscosity of the FFM to such low viscosity PSAs. FFM and PSA viscosity matching is described in more detail below with reference to FIGS. 14 and 15. Hot melt PSAs having a Brookfield viscosity of greater than about 40 Pa*s at such above-defined coating conditions are less desirable because of the need for specialized coating equipment, and lower line speeds. PSA viscosity curves for desired hot melt PSAs at different coating conditions, i.e., within a defined shear rate window at a temperature of approximately 190°C are discussed below with reference to FIG. 14.

Commonly available rubber-based PSAs that are well suited for hot melt application include those disclosed in U.S. Patent No. 3,239,478, that is incorporated herein by reference. A commercial example of such hot melt adhesives is H2187-01 hot melt PSA sold by Ato Findley, Inc., of Wauwatusa, Wisconsin, having a Brookfield viscosity at the above-noted coating conditions of around 5 to 10 Pa*s. Suitable emulsion and solvent acrylic-based PSAs include those disclosed in U.S. Patent Nos. 5,639,811 and 5,164,444, respectively, that are incorporated herein by reference.

The layer of PSA material can be applied to the substrate for example in the form of a hot melt, an emulsion or aqueous dispersion, as a solvent solution, or as a thin membrane. The method that is used to apply the PSA material depends on the physical form of the PSA. and can include spray, roll, extrusion, and die application methods. In preferred embodiments, the PSA material is applied in the form of a hot melt, solution, or emulsion by extrusion or die application methods. As will be discussed below, multi-die application methods can be used to simultaneously apply the PSA material along with the FFM.

Prelaminate faceless PSA constructions of this invention are prepared according to the principles disclosed in PCT International Patent Application No. PCT/US97/17404, that is incorporated herein by reference.

The type of FFM that is selected may vary depending on the type of material that is used to form the PSA layer, and is better described below. For example, it may be desired that the FFM have a solubility parameter that is incompatible with that of the PSA to prevent migration between the two layers when applied simultaneously. Different methods can be used to apply the FFM to the surface of the PSA layer, depending on the type of FFM that is selected. Generally speaking, the methods described above for applying different forms of the PSA material can also be used to apply the same forms of the FFM. For example, FFMs in the form of aqueous dispersions can be applied by conventional coating methods such as roll coating, spray coating, extrusion coating, die coating and the like, or by Meyer rod process; FFMs in the form of a solution or emulsion can be applied by extrusion, die, spray, or roll process: and FFMs in the form of a hot melt can be applied by roll, spray, extrusion, or die process.

The application techniques generally fall into the category of either being a multi-step or sequential coating process, i.e., application of first the PSA layer and then the FFM, or a single-step or simultaneous process, i.e., application of the PSA and FFM together. In the multi-step process, the FFM can be applied to the surface of the PSA layer, after the PSA has been applied to the layer of releasable material on the release liner, in the form of a hot melt, aqueous dispersion, or solution by roll, spray, electrostatic, die or extrusion process. In the single-step process, die coating technology is preferably used to apply the FFM onto the PSA layer simultaneously with applying the PSA layer onto the layer of releasable material, in the form of a solution, emulsion or hot melt.

In the case in which the PSA and FFM are simultaneously applied to the release liner, it is generally desirable to use a FFM that is in the same form as the PSA material so that the same application methodology can be used for each. For example, when the PSA is in the form of a hot melt or a solution, the FFM would also be in the same form of a hot melt or solution to facilitate its application by a simultaneous coating process, e.g., by a multi-die process. Simultaneous coating of the PSA and FFM can provide significant advantages in manufacturing efficiency.

In other cases, it is desirable to use sequential coating techniques in order to avoid the requirements of simultaneous coating, for example to be able to use existing PSA coating equipment, or to allow the use of different application methodologies for the PSA and the FFM, e.g., permitting aqueous coating of the PSA onto the liner followed by hot melt die coating of the FFM. Additional advantages of using sequential coating techniques for applying the FFM are that: (1) it enables using FFMs that have a viscosity range outside of the viscosity compatibility window that is needed for simultaneously applying the FFM and PSA, e.g., it permits using such FFM materials as polypropylene. (See Examples 8 and 9); (2) it enables using FFMs that are in the form of multilayer constructions, e.g., a coextruded multilayer FFM; (3) it avoids the need to provide a gap between the die lips and the already-formed PSA layer surface without scraping off the PSA material; and (4) it enables using different curing methods to cure the PSA layer and FFM, thereby building process flexibility into the coating operation, e.g., permitting actinic curing of the PSA followed by thermal curing of the FFM.

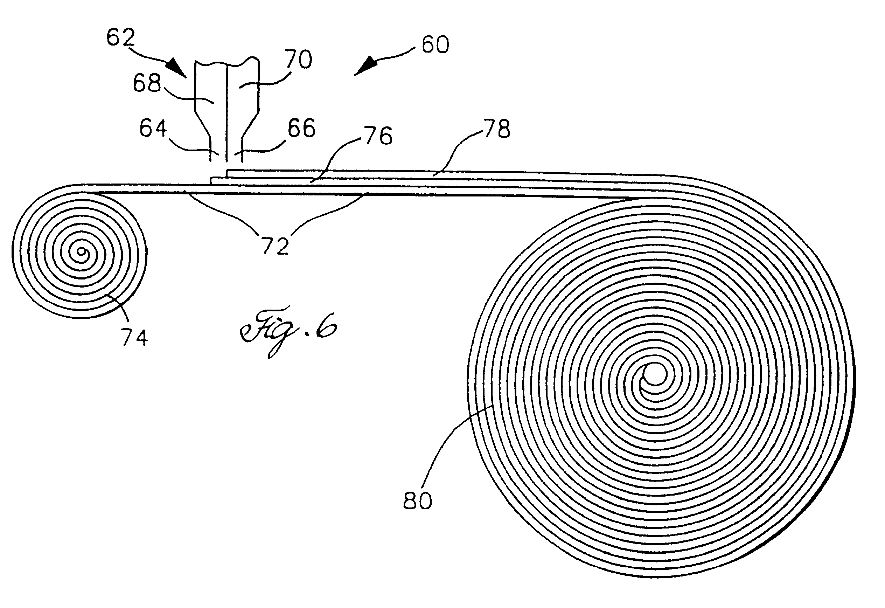

FIG. 5 illustrates a first method of applying the PSA layer and FFM layer onto a substrate in the form of a web stock by a multi-step die or tandem die process 40, where the PSA layer 42 is applied to a release liner 44 in the form of a solution, emulsion or a hot melt, and the FFM layer 46 is subsequently applied to the PSA layer 42 as a solution, emulsion or a hot melt. This first method is illustrative of one that can easily be implemented using existing PSA coating equipment to permit subsequent application of the FFM. The PSA layer 42 is applied to the layer of releasable material on the release liner 44 by a PSA coating station 48, which contains a volume of PSA material 50. A FFM coating station 52 is disposed downstream from the PSA coating station 48 and comprises a volume of FFM 54 for depositing onto the PSA layer 42.

In the event that the PSA layer is applied in the form of a hot melt, it may be desirable that a cooling platen (not shown) or the like be placed between the PSA coating station 48 and the FFM coating station 52, to cool the PSA layer 42 to prevent migration of the FFM therein. Where the FFM is also applied as a hot melt, it may also be desirable to place a cooling platen (not shown) or the like after the FFM coating station 52 to cool the FFM 46 to ensure that it is tack free before the faceless PSA construction is wound on a collection roll 56.

In the event that both the PSA layer is applied in the form of a solution or emulsion, it may be desirable to place an evaporator (not shown) or the like between the PSA coating station 48 and the FFM coating station 52, to drive the volatile species out of the PSA layer to prevent bubble formation after application of the FFM layer. Where the FFM is also applied as a solution or emulsion, it may also be desirable to place an evaporator (not shown) or the like after the FFM coating station 52 to evaporate the volatile species out of the FFM layer 46 before the faceless PSA construction is wound on the collection roll 56.

As a continuous roll of the release liner 44 is unwound or dispersed from a pay out roll 58, the PSA coating station 48 deposits a predetermined thickness of PSA material 50 onto the layer of releasable material on the release liner 44, forming a PSA layer 42 thereon. The FFM coating station 52 deposits a predetermined thickness of the FFM 54 onto the surface of the PSA layer 42, as the faceless PSA construction travels in a continuous web through the FFM coating station 52, forming a FFM layer 46 thereon.

In an example embodiment, the PSA layer 42 has a coat weight in the range of from about 1 to 125 grams/square meter (g/m²), or has a thickness in the range of from about 1 to 125 mm assuming a PSA density of about one, where a preferred PSA layer coat weight is in the range of from about 10 to 25 g/m² or 10 to 25 mm. An advantage of using a relatively thin PSA layer is that it prevents the PSA material from oozing away from the label, e.g., from the edge of the label in certain applications. It is desired that the FFM layer 46 have a thickness in the range of from about 5 to 125 mm, where a preferred FFM layer thickness is in the range of from about 10 to 50 mm.

It is to be understood that the coat weight and layer thickness of both the PSA and FFM may vary depending on different types of PSA materials and FFMs that are selected, the method that is used for applying the same, and the particular faceless PSA construction application. A prelaminate PSA construction comprising a FFM layer within the described thickness provides a thin, highly-conformable construction that is nonblocking to prevent adhesion between the PSA layer and an adjacent backside surface of a release liner to permit storing and/or transporting the prelaminate construction for further processing, e.g., printing, overlaminating, converting, dispensing and the like. In addition to providing a nonblocking surface to the PSA layer, the FFM layer also contributes to the structural properties of the overlaminated PSA construction without the use of a conventional, preformed facestock. For example, prelaminate PSA constructions used with this PSA construction are highly conformable, and yet have a sufficient Gurley stiffness to permit high speed conversion. Example prelaminate PSA constructions have a Gurley stiffness in the machine direction of less than about 25 mg. For applications calling for a high degree of conformability, the overlaminated PSA construction can be designed having Gurley stiffness of less than about 10 mg, and in some instances less than 5 mg. It is a surprising and unexpected result that such prelaminate PSA constructions, having a Gurley stiffness of less than 10 mg, are capable of being converted by die-cutting and matrix-stripping methods at high speeds, e.g., at web speeds of about 0.75 m/s (150 feet per minute), and in some cases up to about 1.5 m/s (300 feet per minute). Furthermore, prelaminate PSA constructions of this invention having Gurley stiffness values less than 10 mg. have been observed to separate from the release liner at a peel blade edge. For the task of actually applying a separated prelaminate PSA construction onto a desired substrate, however, non-conventional dispensing equipment may be required for low stiffness PSA constructions, e.g. PSA constructions having a Gurley stiffness of less than about 10 mg. Exemplary non-conventional dispensing apparatus for use with lower stiffness label constructions includes, for example the Ventura dispenser as described in U.S. Patent Nos. 4,217,164 and 4,303,461 that are each incorporated herein by reference.

If desired, the coat weight and/or thickness of either the FFM or PSA layer can be metered by the coating die, or optionally by use of a Meyer rod that can be placed after each respective coating station. To ensure accurate monitoring of the thickness of the FFM, ultraviolet (UV) chromophores can be added to the FFM to allow visual observation during the coating process, and to allow monitoring of the coat weight by on-line use of a combination ultraviolet and radio frequency gauge. A particularly preferred UV chromophore is Leucopure EGM, available from Clariant Corporation (Charlotte, NC).

After the prelaminate PSA construction has passed the FFM coating station 52 and the FFM 54 has been applied, the prelaminate PSA construction can be routed to and be collected on a collection roll 56 for storage and/or transporting before further processing. When a desired quantity of the prelaminate PSA construction has been manufactured and collected, the collection roll 56 is removed from the process and is stored for subsequent processing, e.g., printing, overlaminating, and/or converting during a separate operation at either the same or at a different geographic location, thereby providing enhanced manufacturing flexibility. Alternatively, rather than being collected, the prelaminate faceless PSA construction can be routed for subsequent operations such as printing or other marking process, lamination with the overlaminate film, and converting during the same manufacturing operation.

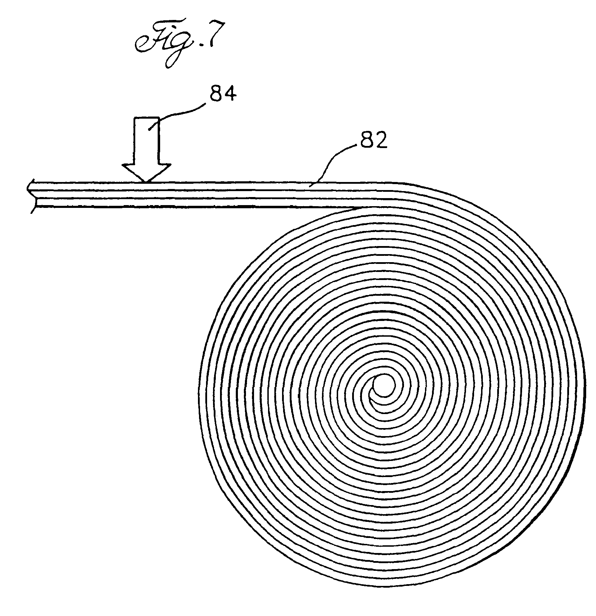

A second method of applying the PSA layer and FFM, using a single-step multi-die process 60, is illustrated in FIG. 6. A dual die station 62, comprising a PSA die chamber 64 and a FFM die chamber 66, comprises a quantity of PSA 68 and FFM 70 in respective separated compartments. The dual die station 62 is used to deposit both the PSA and the FFM, in the form of either a hot melt, solution or emulsion, simultaneously in a single step operation.

Although FIG. 6 illustrates a single-step, multi-die process comprising a dual die station for applying the PSA layer and FFM layer, it is to be understood that the multi-die process may comprise a die station having more than two die compartments, depending on the number of layers to be deposited onto the release liner. Multi-die application methods useful for applying both the PSA layer and the FFM layer are further described in U.S. Patent Nos. 5,718,958; 5,728,430 ; and 5,827,609; and in Published PCT International Application Nos. PCT/US95/11807; PCT/US95/11733: PCT/US95/11734; and PCT/US95/11717, which are herein incorporated by reference.

As a continuous roll of the release liner 72 is unwound from a pay-out roll 74, the PSA die chamber 64 deposits a desired thickness of the PSA material 68 onto the layer of releasable material on the release liner 72, forming a PSA layer 76 thereon. At the same time that the PSA material is being deposited, a desired thickness of the FFM 70 is deposited by the FFM die chamber 66 onto the just-formed surface of the PSA layer 76, forming a FFM layer 78 thereon. The finished, prelaminate faceless PSA construction is either routed for subsequent printing, overlamination, and/or conversion, or is collected on a collection roll 80.

As discussed above, subsequent printing, overlaminating, and conversion of the prelaminate faceless PSA construction may occur at the same geographical location where the prelaminate faceless PSA construction is manufactured, or may occur at a different geographical location, thereby providing an enhanced degree of manufacturing flexibility.

FIGS. 16 to 19 illustrates exemplary multilayer die embodiments that can be used to simultaneously apply the PSA and FFM layers. FIG. 16 illustrates a multilayer die 150 such as that discussed above and illustrated in FIG. 6. Although the die shown in FIG. 16 illustrates the application of two coating layers to a substrate 152, it will be understood that the principles of this method are equally applicable to more than two layers. In accordance with standard practice, the substrate, which in this case preferably comprises silicone coated paper, is referred to as a "web" and is formed into a long roll. The web 152 travels around a back-up roll 154 as it passes the distal end of the multilayer die 150. As shown in FIG. 16. both the die 150 and the web 152 have substantially equal width such that the entire width of the web is coated in one pass by the fluid flowing out of the die 150 and onto the web 152. In this case, two separate fluid layers are flowing out of manifolds 156 formed in the die 150 and along individual slots 160, which are defined by the die's distal ends 162. The slots 160 each communicate with the interface between the web 152 and the distal most tips 158 of the die 150. These tips are referred to as the "die lips" 158 and are illustrated and described in more detail in connection with FIG. 17 below.

The multilayer die 150 is modular, thus allowing for variations in the individual slots 160 and lip 158 configurations without necessitating modifications to the other slots and lips. Thus, these geometries can be adjusted in order to achieve successful coating. Other variables include the "coating gap" (c.g.) and the "angle of attack" (α) of the die. As illustrated in FIG. 16, the coating gap is the distance that the lips 158 are set back from the web. The angle of attack (α) is the degree of angular adjustment of the lip surfaces and of the entire die with respect to the outer pointing normal of the web as illustrated in FIG. 18. Another variable is the web speed, which preferably varies between 50 and 1,000 feet per minute, or more.

Either one of two die coating methods may be utilized: interference coating or proximity coating. In the former case, the lips 158 of the die actually are pressed forward in the direction of the web 152, but do not contact the web nor cause any damage thereto, because they hydroplane on a thin layer of coating material. However the pressure may actually cause the back-up roll 154 (typically constructed from a hard rubber material) to deform in order to relieve the pressure of the die against the lips 158. In proximity coating, the lips 158 of the die 150 are positioned a precise distance from the web 152 and are not pressed forward toward the web. The back-up roll 154 is typically constructed from a stainless steel that allows for precision in the circumference of the roll and minimizes roll run-out. The method described herein can be successfully utilized with either type of coating technique.

Because very thin layers of high viscosity adhesives are being coated at relatively high web speeds, the process must be carefully controlled. Such control is accomplished with the present multilayer die coating technique, in part due to the geometry and configuration of the die lips 158. FIG. 17 shows a close-up view of the distal most tips 162 of the multilayer die of FIG. 16, including the lips 158 associated with each slot 160. showing the interface or coating gap with respect to the web 152. With respect to FIG. 17, it should be noted that, for ease of illustration, the die 150 is shown rotated 90° from the position shown in FIG. 16. Moreover, the web 152 is shown in a horizontal arrangement, when in actuality, there may be a slight curvature to the web 152 and back-up roll (not shown) at this point; however, the distances involved are so short that a good approximation of the fluid dynamics can be achieved by assuming a horizontal web 152.

For consistent reference, the individual lips 158 of the multilayer die 150 shall be referred to with respect to the direction of travel of the web 152. For example, the lip 158a shown to the left in FIG. 17 will be referred to as the "upstream lip," while the right-most lip 158c shall be referred to as the "downstream lip." Thus, the "middle lip" 158b will have that same reference. Accordingly, the upstream and middle lips 158a. 158b define an upstream feed gap 164 through which a PSA material 166 flows onto the web 152 to form the PSA layer 168 of the PSA construction. Likewise, the middle lip 158b and the downstream lip 158c together form a slotted feed gap 170 through which the FFM 172 flows onto the top of the PSA layer 168 as the web travels in left-to-right direction, as illustrated in FIG. 17. This forms the FFM 174 of the PSA construction.

Coating of viscous PSA materials or FFMs at these web speed rates can involve a number of problems. For example, recirculations in the flow of either the PSA or FFM layers can result in certain defects in the final PSA construction. Such recirculations may occur if the separation point of either the PSA or FFM with respect to the die lips 158 occurs at an inappropriate location. In addition, an extreme pressure gradient can result in the upstream leakage of liquid out of the coating gap area, again causing defects in the end product due to nonuniform PSA or FFM layer thicknesses, etc. Moreover, these and other defects result in the diffusion of one layer in the other since the layers are being coated simultaneously in the liquid state. Such diffusion jeopardizes the integrity and performance of the resulting product.

Thus, it has been found, with respect to the multilayer die coating described herein, that it is very important to control the pressure gradients of the adhesives under each lip. In particular, the FFM layer should separate from the middle lip at the downstream corner of the lip. In order to achieve such coating control, the lips 158 of each die section are stepped or spaced away from the web 152 in the downstream direction. This design allows the lips to generate the appropriate pressure gradients and to ensure smooth flow of the FFM and uniform layer thicknesses. The adjustment of a number of run parameters are necessary in order to achieve this goal. For example, the coating gaps at lip 158b and 158c should be approximately in the range of one to three times the compounded wet film thicknesses of the layers being fed from upstream of said lip. Under the upstream lip 158a. the net flow rate is necessarily zero, and a turn-around flow is the only possibility. Thus, the coating gap under this lip is solely set in order to avoid leakage of the liquid out from the coating gap in the upstream direction. Moreover, the upstream step, defined as dimension A in FIG. 17, and the downstream step, defined as dimension B, may range anywhere from zero to four mils (.0 inches to .004 inches /0 to 100 µm). The feed gaps (defined as dimensions C and D in FIG. 17) can also be adjusted anywhere between one and fifteen mils (0.001 inches to 0.015 inches / 25 µm to 325 µm), preferably not to exceed five times the wet film thickness of their correspondent layers. In addition, the length of the lips 158 in the direction of web travel play an important role in achieving the proper pressure gradient. Thus, the upstream lip 158a should be approximately two millimeters in length, or more, as necessary to seal the head as noted above. The downstream lip 158c and middle lip 158b may fall within the range of 0.1 to 3 mm in length.

It will be recognized that one of ordinary skill in the art can adjust these various parameters in order to achieve the proper fluid dynamics for uniform layer coating. Of course, persons of more than ordinary skill can adjust the die and run parameters more precisely in order to achieve good results. However, such persons are not always readily available in production settings. Therefore, it is advantageous to provide a die geometry that will increase the size of the window of successful multilayer coating operation. This can be achieved by certain adjustments in the orientation of the die lips.

Thus, FIG. 18 illustrates the die 150 of FIG. 17 rotated slightly in the clockwise direction representing an "angle of attack" (α). For consistent reference, the angle of attack (α) shown in FIG. 18 represents a negative angle of attack, or a "converging" orientation of the downstream lip 158c with respect to the web 152. This converging lip orientation provides a negative pressure gradient (in the direction of web travel), along the downstream lip 158c, which is beneficial in preventing a coating defect well known as "ribbing," a pattern of regular striation in the sense of the web travel in the film. The fact that the middle and the upstream lips 158a and 158c also achieve a convergent orientation is not particularly beneficial. Although the angle of attack of the die can be varied widely in order to achieve these advantages, it has been found that angles in the rate of 0 ° to -5° are appropriate.

An even further successful operating window can be achieved with additional lip modifications. FIG. 19 shows a variation of the lip configuration of FIG. 18. In this configuration, the downstream lip 158c is angled or beveled so as to have a converging profile, similar to that shown in FIG. 18. However, the middle lip 158b is positioned so as to be flat or parallel with respect to the web 152. The upstream lip 158a, on the other hand, is beveled so that it is diverging from the web 152 in the downstream direction. This configuration, again, provides the appropriate pressure gradient under the individual lips to avoid recirculations and upstream leakage. Moreover, if perturbations in the coating conditions occur (such as, for example, due to roll run-out, foreign objects on the web, variations in ambient pressure, etc.), the converging configuration of the upstream lip 158a shown in FIG. 19 will produce a dampening effect on flow conditions so that defects in the coating layers do not occur. In this manner, the multilayer coating bead acts as a nonlinear spring to dampen out such unwanted events in order to return to steady state. The die 150 can then be adjusted in accordance with standard angle of attack variations to achieve favorable coating conditions. Because the lips 158 are pre-disposed or beveled in a favorable orientation, the adjustment of angle of attack, as well as coating gap, need not be so precise. Thus, persons of ordinary skill or even less skill can successfully achieve good coating results.

Referring back to FIG. 6, in the event that the PSA layer and FFM layer are applied as a hot melt, a cooling platen (not shown) or the like can be placed between the dual die station 62 and the collection roll 80 to reduce the temperature of the FFM layer 78 to ensure that it is tack free before being collected on the collection roll 80, thereby avoiding unwanted adhesion to the adjacent backside surface of the release liner. In the event that the PSA layer and FFM layer are applied as a solution or emulsion, an evaporator (not shown) or the like can be placed between the dual die station 62 and the collection roll 80 to drive off the volatile species from the faceless PSA construction before being collected on the collection roll 80 to avoid unwanted sticking to the adjacent backside surface of the release liner.

After the FFM layer has been deposited onto the underlying PSA layer, it may be desirable to further heat the FFM layer to ensure that any streaks, surface imperfections or other voids that may have been formed therein and that expose the underlying PSA layer are removed so that the FFM layer forms an imperforate continuous film covering the PSA layer before being collected. Such further heat treating step is helpful when the FFM has a high solids content either during or after its application. A FFM applied as a hot melt, by either multi-step or tandem die process, has a solids content of approximately 100 percent. Streaks or other surface imperfections that expose the underlying PSA layer may be formed in the FFM during its application by particulate matter in the die. Because of its high solids content, the FFM is unable to readily migrate or flow after it is applied to fill in such streaks or imperfections in the FFM layer. If left untreated, the exposed PSA layer will be allowed to make contact with a backside surface of the release liner when the faceless PSA construction is collected on the collection roll.

Contact between the PSA layer and the contiguous release layer backside surface will cause the faceless PSA construction to adhere to such backside surface, thereby making the faceless PSA construction difficult to unwind and causing the PSA layer to bond permanently to the release layer backside surface. Once the PSA layer is pulled away from its underlying release layer and is transferred to the backside surface of the contiguous release layer the PSA faceless construction is ruined and is unsuited for lamination.

A FFM that is applied as a solution or as an emulsion, by either multi-step or tandem die process, will have a solids content of approximately 100 percent after the solvent or emulsifying agent has been evaporated away. Like the hot melt applied FFM layer, the die process that is used to apply a solvent or emulsion FFM may also create streaks or other imperfections in the FFM that exposes the underlying PSA layer. Such streaks interfere with the nonblocking performance of the FFM layer, and thus are not desired where the prelaminate PSA construction is to be collected for further processing. In the event that the prelaminate PSA construction is subsequently printed and overlaminated after formation, the presence of such streaks is less of a concern and need not be corrected unless they affect print quality.

Streaks or imperfections in the FFM may be formed in solution or emulsion applied FFMs when either the FFM does not adequately wet the underlying PSA layer, or when the FFM becomes dewetted with the underlying PSA layer during further processing, e.g., during evaporation. If left untreated, the streaks or imperfections could cause a catastrophic failure of the faceless PSA construction (as discussed above) during the unwinding process by PSA layer transferal. Streaking or the formation of other imperfections that may appear in the FFM, and that expose the underlying PSA layer, can be eliminated by heat treating the faceless PSA construction at a stage after application of the FFM layer but before the faceless PSA construction is collected on a collection roll. Heat treating the FFM layer at this point causes the FFM to soften, reflow and migrate to fill in any streaks or imperfections.

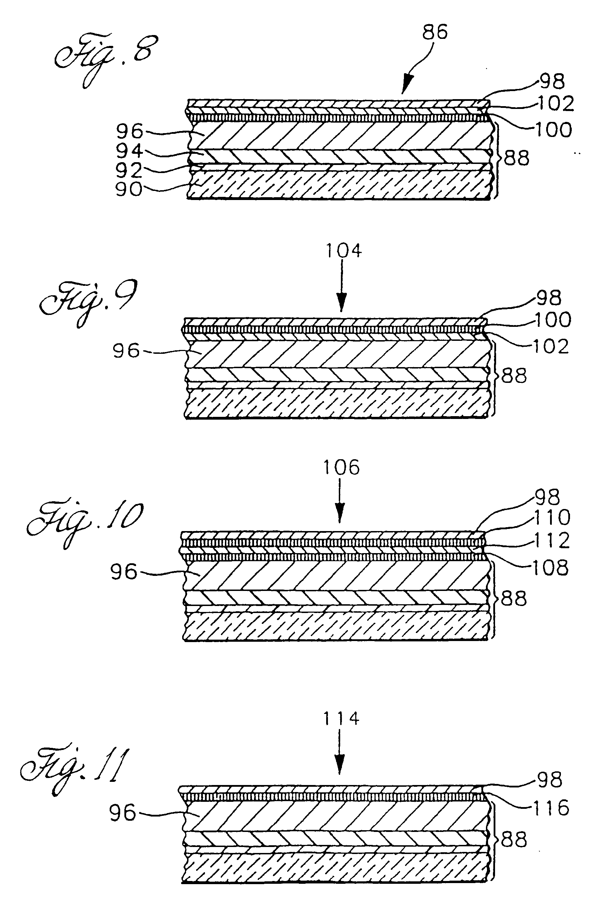

Referring to FIG. 7, where the FFM layer 82 is applied as a hot melt and where streaking is detected, the FFM layer can be heat treated by exposure to a radiation, convection or conduction heating means as indicated generally by arrow 84 to a flow temperature that is sufficiently high to cause the FFM to reflow and fill any streaks or imperfections. In an example embodiment, the FFM layer is heated to a temperature of approximately 150°C (300°F) to cause it to flow a sufficient amount to fill all streaks or imperfections that expose the underlying PSA. and thereby produce a FFM layer in the form of an imperforate continuous film that completely covers the underlying PSA layer. Referring still to FIG. 7, where the FFM layer 82 is applied in the form of a solvent or emulsion and where streaking is detected, the FFM layer can be heat treated by exposure to radiation, convention or conduction heating as indicated by arrow 84. Heat treating the FFM layer 82 can take place independently from the evaporation operation, and can be effected by a heating means that is independent of that used for the evaporating operation. Alternatively, the step of heat treating the FFM layer 82 can be carried out as part of the evaporation operation by further heating the FFM after evaporation to a flow temperature that is sufficiently high to cause the FFM to flow and fill any streaks or imperfections. In an example embodiment, the FFM layer is heated to a temperature of approximately 150°C (300°F) after being evaporated to cause it to flow a sufficient amount to fill all streaks or imperfections that expose the underlying PSA. and thereby produce a FFM layer in the form of an imperforate continuous film the completely covers the underlying PSA layer.

In an example embodiment, where streaks or other imperfections are discovered to be present in the FFM layer, the FFM is heat treated in three continuous zones using forced air convection ovens. The first zone was heated to 100°C, the second to 120°C, and the third to 140°C. Each oven was approximately 4.5 m in length. The coated laminate traveled at a speed of approximately 0.25 m/s (50 feet per minute), giving a residence time of approximately 18 seconds through each zone.

Samples of prelaminate PSA constructions prepared according to the conditions discussed below were tested to determine the surface roughness of the FFM layer before and after being heat treated in the manner discussed immediately above. The FFM layer of a non-heat treated faceless PSA construction had an average surface roughness of approximately 0.87 mm, and a RMS surface roughness of approximately 1.08 mm, when measured using a Wyco surface morphology microscope scanned at a magnification of approximately 5.3 times, using a scan area of approximately 1170 x 880 mm, and using a point-to-point distance of approximately 3.10 mm. The FFM layer of a heat treated prelaminate faceless PSA construction had an average surface roughness of approximately 0.58 mm, and a RMS surface roughness of approximately 0.71 mm under the same measurement conditions. Based on these results, the process of heat treating the FFM layer as described herein reduced the surface roughness of the FFM layer by approximately 40 percent, thereby evidencing the filling and minimization of streaks and other imperfections in the FFM layer. Additionally, the heat-treated FFM layer also displayed a surface finish that was glossier than that of the non-heat treated faceless PSA construction.

A feature of prelaminate faceless PSA constructions for forming overlaminated PSA constructions of this invention is that they do not rely on the use of conventional preformed facestocks for purposes of providing a substrate for accommodating printing and marking indicia. This enables the overlaminated PSA construction to be manufactured at a lower material cost, both due to the absence of a conventional facestock material, and due to reduced layer thicknesses for remaining construction materials. Another feature of using such prelaminate PSA constructions is that the chosen FFM can be a heat-activatable material that can be activated to form its own adhesive surface to facilitate subsequent lamination with an overlaminate film material without having to use separate adhesives or bonding agents.

Faceless PSA constructions of this invention also promote manufacturing efficiency both by enabling the FFM to be applied with readily available coating machinery, thereby eliminating the need for subsequent laminating machinery, and by enabling simultaneous application of the FFM and PSA. thereby avoiding the need for sequentially applying a facestock. Prelaminate PSA constructions of this invention also promote application flexibility, enabling use of the overlaminated PSA construction in applications where a high degree of flexibility/conformability is needed, e.g., where the label substrate surface has a flexible, contoured, or irregular shape.

While particular methods for manufacturing prelaminate PSA constructions have been described and illustrated, it is to be understood that other methods for applying PSA materials, and for making PSA constructions, can also be adapted to manufacture faceless PSA constructions of this invention.

Suitable FFMs useful for forming prelaminate faceless PSA constructions of this invention include materials that are: (1) coatable or extrudable; (2) continuous film formers: and (3) capable of completely and uniformly covering the underlying PSA layer. Furthermore, the continuous film formed by the FFM. in combination with the PSA and liner, should have the physical properties needed to facilitate printing, overlaminating, and converting, and should be compatible with the dispensing method employed for converted labels (optionally, in combination with an overlaminate film layer). A key feature of FFMs useful for forming prelaminate faceless PSA constructions is that they cure, dry or cool to form a completely nonblocking layer. Requisite mechanical properties needed for converting of the FFM in combination with the PSA and overlaminate film layer, is that these are sufficiently self-supporting, and that they have adequate properties of tensile strength, elongation and tear. Example FFMs include thermoplastic polymers selected from the group including, but not limited to polyolefins such as polypropylene, ethylene copolymer, polyethylene, polyvinylchloride, polyamide resins, polyester resins, polyurethane resins, varnishes, polyacrylate resins, vinyl acetate resins, vinyl acetate copolymers and vinyl acetates such as ethylene vinyl acetate (EVA) and ethylene methyl acrylate (EMA), ethylene methacrylic acid (EMAA), nylons, vinyl pyrillidone, Hytrels, polycarbonates, polystyrenes, PVOH's, PVDF's, copolymers and mixtures thereof. Additives may be included in the FFM. such as fillers or nucleating agents.

After application of the PSA and/or the FFM, either or both of these layers may be radiation cured, such as by EB curing.

When the FFM used to form prelaminate faceless PSA constructions of this invention is applied in the form of a hot melt, solution, or emulsion by dual die method, it is desired that the FFM have a hot melt, solution, or emulsion viscosity during the coating operation that is within a defined window or range when compared to that of the selected PSA material for a given shear rate range and coating temperature. For the simultaneous application of the FFM and the PSA material in the form of a hot melt by, for example, dual die method, it is important that the FFM and PSA material have compatible viscosities at the particular coating conditions. This is desired to enable the FFM to form a continuous film that completely and uniformly covers the underlying PSA layer, thereby forming a nonblocking faceless PSA construction.

FIG. 14 illustrates viscosity v. shear rate curves for five example hot melt adhesives; namely, example PSA No. 1, a general purpose rubber-based oil-containing hot melt adhesive taken at 190°C; example PSA No. 2, a non-oil-containing low tackifier rubber based hot melt adhesive taken at 190°C; example PSA No. 3, a rubber-based hot melt adhesive with low temperature tackifier taken at 180°C; example PSA No. 4, the H2187-01 hot melt adhesive described above taken at 190°C; and example PSA No. 5, the same hot melt adhesive of example PSA No. 3 except taken at 200°C. The viscosity v. Shear rate curves for each of the example PSA are taken at a constant temperature, e.g., 190°C, within a defined shear rate range.

The portion of each curve that is of particular interest for defining a working viscosity window for the FFM depends on the type and particulars of the coating machinery. For example, when using a multiple die coating station the size and arrangement of the die ports can impact the particular shear rate of the PSA material during the coating process. For an example multiple, e.g., dual, die coating station, used to form an exemplary prelaminate PSA construction of this invention, the shear rate range of interest is between approximately 1,000 s⁻¹ and 10,000 s⁻¹. As illustrated in FIG. 14, the viscosity of each example hot melt PSA progressively decreases with increasing shear rate. It is generally desirable that a hot melt PSA have a viscosity curve at 190°C contained within a viscosity window of from about 1 to 100 Pa*s (10 to 1,000 Poise) within the defined shear rate range of 1,000 s⁻¹ and 10,000 s⁻¹. Preferred PSAs useful for forming PSA constructions of this invention have a viscosity range of from about 5 to 40 Pa*s (50 to 400 Poise) within the defined shear rate.

The simultaneous delivery of the PSA and FFM is possible using conventional coating equipment and a multi-die or an extruder if the viscosities between the respective materials are relatively close and the two materials do not significantly interact with each other. When applied simultaneously using conventional die methods it is desired that the PSA and FFM have a hot melt viscosity and a melting temperature that are relatively similar. For purposes of ensuring FFM compatibility with the PSA during hot melt application it is desired that the FFM have a viscosity curve or range within the shear rate range of approximately 1,000 s⁻¹ to 10,000 s⁻¹ that varies from the viscosity curve for the PSA material by a factor of from about 0.07 to 15 times the hot melt PSA viscosity. For example, a suitable hot melt FFMs for application with one of the hot melt PSA materials illustrated in FIG. 14 include those having a minimum viscosity range of from about 0.07 Pa*s to 7 Pa*s (0.7 Poise to 70 Poise), and a maximum viscosity range of from about 15 Pa*s to 1,500 Pa*s (150 Poise to 15,000 Poise), within the stated shear rate range at an identical temperature, i.e., the FFM and PSA coating temperature.

For shear rates of greater than 10,000 s⁻¹ it is desired that the FFM have a viscosity that varies from the viscosity curve for the PSA material less than by a factor of from about 0.07 to 15 times the hot melt PSA viscosity. The degree of variance is graduated starting from a factor of about 0.07 to 15 times the hot melt PSA viscosity at 10,000 s⁻¹ and ending with a factor of about 0.12 to 8 times the hot melt PSA viscosity at 40,000 s⁻¹.

FFMs having a hot melt, solution, or emulsion viscosity outside a window or range of viscosities compatible with the viscosity of the PSA material can produce a FFM layer having film defects that prevent complete and uniform layer coverage. In a preferred embodiment of the present invention, FFMs used with conventional hot melt PSAs are, for example, those having a hot melt viscosity window during coating by a dual die process that is within a factor of about 8 times the viscosity of the just-applied PSA material at a shear rate of approximately 40,000 s⁻¹ and at a dual die temperature of approximately 180°C.

FIG. 15 illustrates viscosity v. shear rate curves for a number of different example FFMs; namely, example FFM No.1, LD 509 (a low density polyethylene material); example FFM No. 2, Nucrel 669 (an ethylene copolymer containing approximately 11 % methacrylic acid); example FFM No. 3. TC-140 (a methylene acrylate copolymer); example FFM No. 4, UL-7520 (an ethylene vinyl acetate copolymer); example FFM No. 5. Enable WX-23 (an ethylene n-butyl acrylate copolymer); example FFM No. 6, Nucrel 599 (an ethylene copolymer); and example FFM No. 7, Unirez 2665 (a polyamide resin). Each of the FFM viscosity v. shear rate curves have been taken at the same temperature of approximately 190°C within a shear rate range of 1.000 s⁻¹ to 10,000 s⁻¹. The FFM materials chosen to be included in FIG. 15 represent those materials generally discussed above that display a viscosity curve or range that varies from the PSA material viscosity by a factor of from about 0.07 to 15 times the hot melt PSA viscosity within the same shear rate range. Each of these FFM materials display a viscosity v. shear rate curve, within the defined shear rate range, within the range of from 1 to 100 Pa*s and, more preferably within the range of from 5 to 80 Pa*s, i.e., well within the defined PSA viscosity compatibility criteria.

A key feature of PSA constructions of this invention is the use of FFM materials that have not before been used in such application. FFM materials described above have viscosity curves that are unique and much lower that those of materials that have conventionally been used in label construction applications. It is believed that many of the above-described FFMs are being used in a manner never before explored and perfected.

Viscosity compatibility between the FFM and PSA material is most accurately achieved by comparing viscosity curves of the two materials as described above. However, depending on material type, the melt index or melt index or melt flow rate of the FFM can be looked upon to provide an initial indication of viscosity compatibilities. Each of the FFMs identified in FIG. 15 have a melt index of at least 70 dg/min or higher. It has been discovered that suitable FFMs include those having a melt index of at least 70 dg/min, and preferred FFMs include those having a melt index of 88 or higher. It is theorized that FFMs having a melt index of above 70 dg/min form an acceptable FFM layer because of viscosity matching of the FFM with the preferred PSA when coated from a multilayer die. Additionally, FFMs having a melt index of above 70 dg/min tend to be brittle and harder to handle during the conversion process, e.g., making the process of matrix stripping difficult. FFMs having a melt index of less than about 70 dg/min will be difficult to coat using multi-die techniques because the higher pressures inherent in such process presents a tendency for flow instabilities to occur. For example, low density polyethylenes having a melt index of 28 were shown to provide a poor FFM layer having chatter marks.

The use of the FFMs discussed above and included in FIG. 15, and the polyamide resins in particular, are suitable FFMs for simultaneous application with conventional hot melt adhesives because their viscosities are similar in magnitude at the application temperatures used to deliver the respective materials. For example, when the PSA is a conventional hot melt adhesive, the melting temperatures of the PSA are in the range of from about 150°C to about 200°C, and preferably in the range of from about 165°C to about 180°C. It is, therefore, desired that the FFM selected for use with such PSA have a melt temperature below about 200°C, and preferably in the range of from about 150°C to 180°C.

It is desired that the FFM selected also have a chemistry that is not compatible with the underlying PSA material to prevent its migration into the PSA layer when deposited onto the PSA layer. Migration of the FFM into the PSA layer is not desired because it: (1) impairs the ability of the FFM to form a completely nonblocking layer; (2) interferes with the adhesive properties of the PSA layer; and (3) reduces the ability of the FFM layer to receive and retain printing and marking indicia.

It is desired that the FFM layer have a tensile strength of at least 1.4 MPa, and more preferably in the range of from 1.4 to 14 MPa. A FFM having a tensile strength less than about 1.4 MPa can produce a faceless PSA construction that is difficult to convert by die-cutting and matrix-stripping methods at cost effective web speeds, e.g., at web speeds greater than about 0.25 m/s. A FFM layer having a tensile strength greater than about 14 MPa can produce a faceless PSA construction that is difficult to die cut and matrix strip, depending on the particular types of PSA and FFM, and on the particular coat weights of these layers.

It is desired that the FFM layer have a percent ultimate elongation of at least 50, and more preferably in the range of from about 50 to 500. A FFM having a percent ultimate elongation less than about 50 can produce an overlaminated PSA construction that is difficult to convert due to tearing and the like. A FFM layer having a percent ultimate elongation greater than about 500 can produce an overlaminated PSA construction that is difficult to convert by die-cutting and matrix-stripping, depending on the type of PSA and FFM, and on their respective coat weights.

One class of preferred film-forming resins useful for forming the FFM layer are thermoplastic polyamide resins. Particularly preferred polyamide resins are those commercially available, for example, from Union Camp of Wayne. New Jersey under the Uni-Rez product line. Dimer-based polyamide resins available from Bostik, Emery, Fuller, Henkel (under the Versamid product line) to name a few can also be used. Other suitable polyamides include those produced by condensing dimerized vegetable acids with hexamethylenediamine. Referring to the Union Camp materials, the particular Uni-Rez polyamide resin or resin blend that is selected ultimately depends on the particular faceless PSA construction physical properties desired, and may depend on the type and viscosity of the PSA material used to form the underlying PSA layer.

In an exemplary embodiment, where the underlying PSA material is the H2187-01 hot melt rubber-based adhesive (having a Brookfield viscosity of approximately 12,000 cPs at 175°C), a FFM formed from the polyamide resin comprises a blend of Uni-Rez resins that both provides a desired viscosity within the range described above, and produces a self-supporting surface having desired properties of tensile strength, elongation and peel. For example, a 1:3 mixture of the Uni-Rez 2620 and 2623 polyamide resins produces a blend having a Goettfert viscosity curve at 155°C, at a high shear rate of approximately 40.000 s⁻¹ , that differs from the viscosity curve of the H2187-01 PSA material by no greater than a factor of eight at the same temperature and same shear rate. Viscosities for the hot melt rubber-based adhesive and compatible Uni-Rez polyamide resins at different shear rates and at a temperature of approximately 180°C are set forth in Table 1 below.

**Table 1**

| **Material** | **Shear Rate (s⁻¹)** | **Viscosity (P)** |
|---|---|---|
| H2187-01 Hot melt PSA | 10 | 97 |
| | 100 | 90 |
| | 1,000 | 60 |
| | 40,000 | 18 |
| Uni-Rez 2665 | 10 | 112 |
| | 100 | 92 |
| | 1,000 | 85 |
| | 40,000 | 37 |
| Uni-Rez 2620:2623 (mix ratio of 1:3) | 10 | 43 |
| | 100 | 35 |
| | 1,000 | 35 |
| | 40,000 | 19 |

Physical properties of FFM layers formed from the Uni-Rez product line, such as viscosity, tensile strength (ASTM D1708), percent ultimate elongation (ASTM D1708), and peel (ASTM D1876), are set forth in Table 2 below.

**Table 2**

| **FFM Type (Uni-Rez product code)** | **Softening Point (°C)** | **Brookfield Viscosity (cPs at 190°C)** | **Tensile Strength (Psi)** | **Percent Ultimate Elongation** | **Peel (pli)** |
|---|---|---|---|---|---|
| 2620 | 105 | 900 | 1.000 | 50 | 0 |
| 2623 | 136 | 6.500 | 1.000 | 400 | 0 |
| 2665 | 165 | 11,000 | 2,000 | 500 | 0 |
| 2695 | 128 | 5,000 | 200 | 175 | 30 |
| 2620 & 2623 (blend at 1:3) | 128 | 5.100 | 1.000 | 313 | 0 |

Other faceless PSA constructions were successfully prepared by dual die-coating the H2187-01 hot melt rubber-based adhesive with FFMs other than polyamide resins, including low density polyethylene (LDPE)(Melt Index 70dg/min), such as Escorene LD509, available from Exxon Chemical Co. (Houston, TX); ethylene vinyl acetate (Melt Index 135dg/min), such as Escorene UL-7520, a copolymer of ethylene with 19.3% vinyl acetate, also available from Exxon Chemical Co.; ethylene methacrylic acid (Melt Index 88 dg/min), such as Nucrel 699, an ethylene copolymer containing 11 % methacrylic acid, available from E.I. duPont de Nemours and Company (Wilmington, DE); and ethylene methyl acrylate copolymers (Melt Index 135 dg/min), such as TC-140, available from Exxon Chemical Co.

After the FFM layer is deposited to form the faceless PSA construction, the construction can either be collected for future printing, overlaminating, and converting at a different time and/or geographic location, or can be routed to one or more other station for subsequent printing, overlaminating, and/or converting during the same operation. In an example process, the faceless PSA construction is collected for future printing, overlaminating, and conversion. Before printing, it is desired that the faceless PSA construction be treated to make the surface of the FFM layer more receptive to subsequent printing or marking. In an example embodiment, the faceless PSA construction is treated by conventional surface treatment method, such as corona treatment and the like, to increase the surface energy of the FFM layer to facilitate wetting during the printing process.

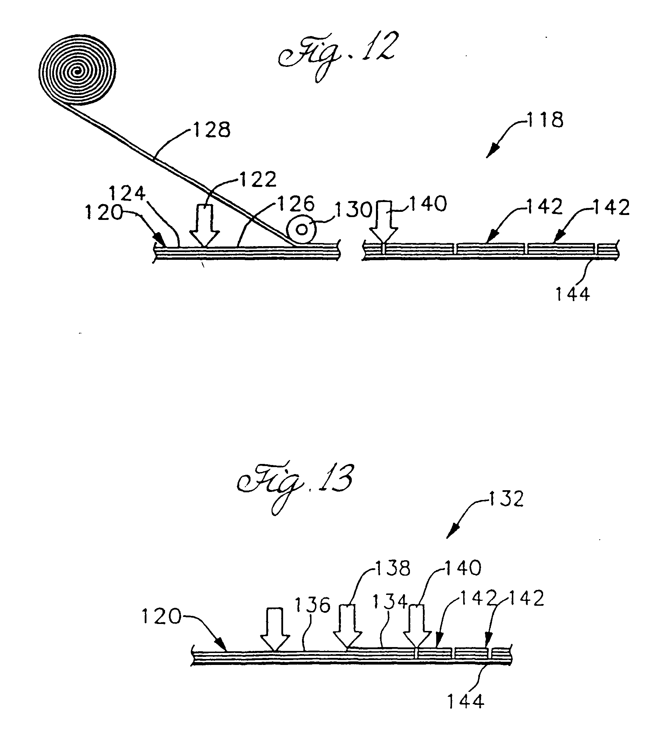

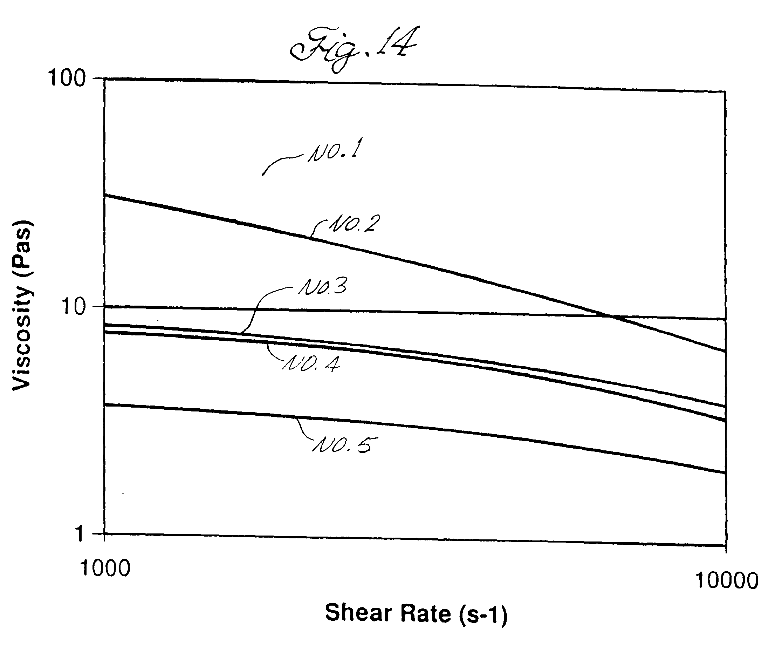

FIG. 8 illustrates a first embodiment overlaminated PSA construction 86, prepared according to principles of this invention, comprising the prelaminate PSA construction 88 as described above and illustrated in FIG. 4, comprising the flexible substrate 90, the release surface 92, the PSA layer 94, and the FFM layer 96. The PSA construction 86 comprises an overlaminate film layer 98 disposed over the FFM layer 96, printing indicia or other form of marking 100 interposed between the FFM layer 96 and overlaminate film layer 98, and a second adhesive layer 102 interposed between the FFM layer 96 and the overlaminate film layer 98 to facilitate laminating the overlaminate film layer thereto. The second adhesive layer 102 can be formed from the same types of PSA materials discussed above for the prelaminate PSA construction, and can include two-component adhesive laminates. It is desired that the second adhesive layer thickness be in the range of from about 1 to 50 mm, and preferably in the range of from about 2 to 20 mm. FIG. 9 illustrates an example overlaminated PSA label construction comprising printed indicia 100 on the FFM layer surface 96 and the second adhesive layer 102 interposed between the overlaminate film layer 98 and the printed indicia 100 and exposed portions of the FFM layer surface 96.

It is to be understood that PSA constructions of this invention can be configured differently depending on the particular finished label application. FIG. 9, for example, illustrates an alternative overlaminated PSA construction 104 comprising the printed indicia 100 disposed along a backside surface of the overlaminate film layer 98, e.g., a reverse printed overlaminate film layer, and the second adhesive layer 102 interposed between the FFM layer surface 96, the printed indicia 100, and any exposed surface portions of the overlaminate film layer 98. As will be discussed in better detail below, the PSA construction of FIG. 9 is formed by using an overlaminate film 98 that is first reverse printed and subsequently has a layer of PSA applied to the reverse-printed surface. The overlaminated film is laminated to the prelaminate PSA construction via the PSA layer by conventional pressure lamination techniques.

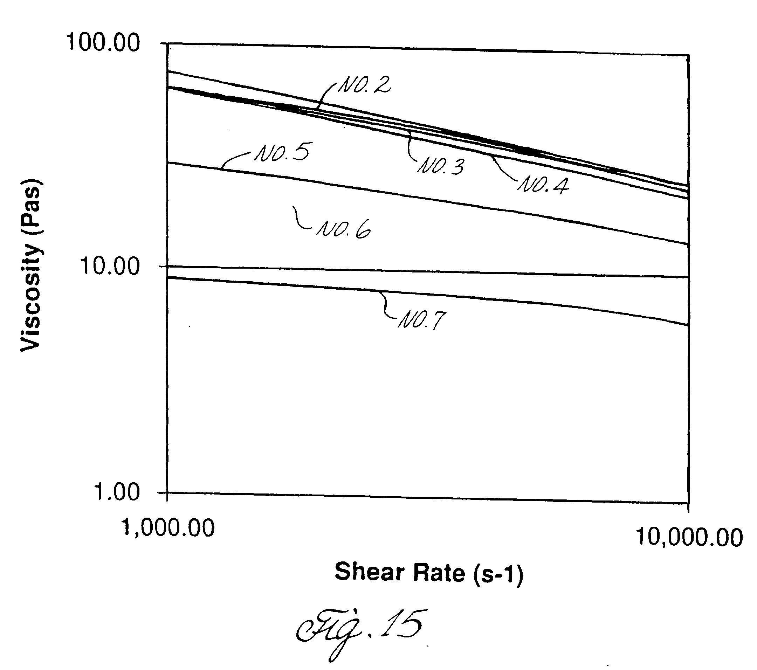

FIG. 10 illustrates another variation of a PSA construction 106 of this invention comprising a first printed indicia 108 disposed on the surface of the FFM layer surface 96, a second printed indicia 110 disposed on the backside of the overlaminate film layer 98, and the second adhesive layer 112 interposed between the first and second printed indicia 108 and 110, respectively. The PSA construction of FIG. 10 can be formed in the same manner as described above for the PSA construction of FIG 9, except that the overlaminate film is laminated to the first printed indicia 112 and exposed FFM layer surface 96 of the prelaminate PSA construction 88.

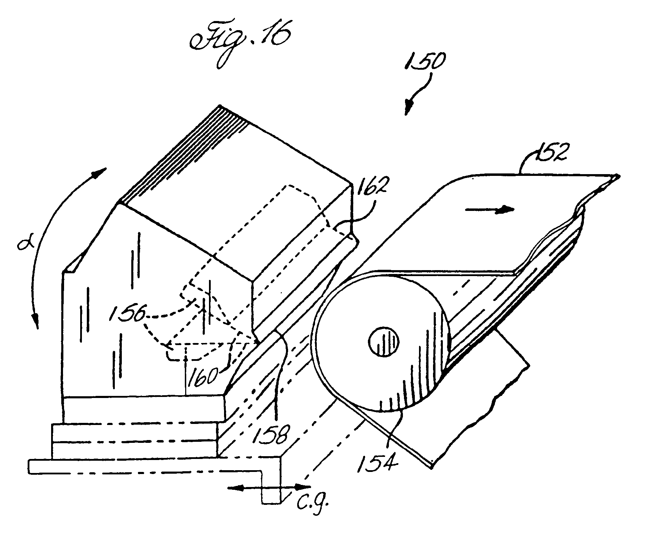

FIG. 11 illustrates still another variation of a PSA construction 108 of this invention comprising a printed indicia 116 interposed between the FFM layer surface 96 of the prelaminate PSA construction 88 and the overlaminate film layer 98. Unlike the PSA constructions illustrated in FIGS. 8 to 10, the PSA construction of FIG. 11 does not include a second adhesive layer for laminating the overlaminate film to the prelaminate PSA construction. Instead, either the FFM layer 96, the overlaminate film layer 98, or both are formed from a material that is activatable to provide its own adhesive surface for lamination. Suitable activatable materials include those that form an adhesive surface when exposed to heat, i.e., are heat activatable, as described in greater detail below.

FIG. 12 illustrates an example process 118 for making overlaminated PSA constructions of this invention comprising passing the prelaminate PSA construction 120 to one or more printing stations 122 where a treated FFM layer surface 124 is printed upon by conventional printing methods known in the art, such as by the gravure method, flexo method, and the like. The FFM layer surface 124 can be printed upon using conventional water-based, solvent-base, and ultra violet inks, to provide a desired printed design and/or message 126. This method can be employed to form the PSA construction illustrated in FIGS. 8, 10 and 11, i.e., the PSA construction comprising a printed indicia on the FFM layer surface.

In an example embodiment, the FFM layer surface 124 is printed upon via one or more printing station 122 by flexo method applying ultra violet ink via Anilox rolls. The total thickness of the print layer 102 is understood to vary depending on the number of printing stations, type and thickness of ink applied at each station to create a particular design or message. In an example embodiment, the total print thickness is in the range of from about 0.5 to 50 mm, and preferably in the range of from about 1 to 20 mm, applied via multiple printing stations and multiple Anilox rolls. Ultra violet ink is designed to cure to form a cross-linked structure that provides supplemental reinforcement to the underlying FFM layer, thereby aiding subsequent converting and dispensing.

In a preferred embodiment, after the prelaminate PSA label construction 120 is printed or marked it is routed for subsequent overlaminating, where a desired overlaminating film or overlaminating film construction is applied to the printed image 126 and/or to the underlying FFM surface 124. The overlaminating step can be performed sequentially after the printing operation or can be performed separately from the printing operation by collecting and storing the printed prelaminate faceless PSA construction as discussed above. In an example embodiment, the printed prelaminate PSA construction is overlaminated sequentially after the printing operation by applying a desired overlaminate film, overiaminate film construction, or film-forming material to the underlying prelaminate PSA construction. Desired overlaminate film materials useful for forming overlaminated PSA constructions of this invention include continuous-film materials selected from the group including, but not limited to, oriented and non-oriented transparent films formed from polyolefins such as polypropylene, polyethylene, polyamide, and other polymer materials capable of providing a protective barrier over the prelaminate PSA construction. It is desired that the film materials be optically transparent to enable viewing the underlying printed image. However, if desired the film material can be tinted or colored to suit a particular label application, e.g., to serve as a background for the printed image.

It is also desired that the overlaminate film material provide a degree of stiffness to the overlaminated PSA construction, to allow the label to be dispensed by conventional peel plate equipment, while not sacrificing the high conformability of the prelaminate PSA construction to enable use of the overlaminated PSA construction in applications calling for flexibility and conformability. Additionally, the overlaminated film can be selected from film materials known to provide some degree of ultraviolet resistance or filtering to protect the underlying label from the adverse effects of repeated sun exposure. Further, the overlaminated film can be selected from continuous film material that also provide a security function to the label construction, such as a hologram or the like.

The PSA construction illustrated in FIG. 11 can be formed by using an overlaminate film material that is itself capable of being heat activated to form its own adhesive surface, and having a sufficient "open tack" time to facilitate laminating to the underlying prelaminate PSA construction at relatively low temperature, so as to avoid unwanted heat effects on the prelaminate PSA construction. "Open tack" refers to the amount of time that a just-activated overlaminate film material remains tacky or open to adhesive contact with an adjacent surface. Certain polymer films, when heated to their melting temperature and cooled, require an amount of time to fully harden. During such time the polymer can remain tacky. This period after cooling where the polymer remains tacky permits ambient or subactivation temperature lamination of a second substrate to the tacky surface, which is highly desirable. Suitable heat-activatable overlaminate film materials include heat seal materials such as thermoplastic polyamide resins. Particularly preferred polyamide resins include those described above for forming the FFM layer. Other suitable polyamides include those produced by condensing dimerized vegetable acids with hexamethylenediamine.

The overlaminated PSA construction illustrated in FIG. 11 is prepared by the example process of FIG. 12 by heating a heat-activatable overlaminate film material 128 to a determined activation temperature by exposing one surface of the overlaminate film material to a heat source (not shown) and passing the activated overlaminate film material 128 through a roller 130 for lamination with the underlying printed surface 126. It is desired that the lamination temperature at the nip be below the activation temperature to minimize any adverse heat effects on the underlying printed surface and prelaminate faceless PSA construction.

Alternatively, the PSA construction of FIG. 11 can be formed having the FFM layer instead of the overlaminate film formed from a heat-activatable material. Such construction is prepared according to the process of FIG. 12 by heat activating the FFM layer surface 124 by suitable heating means after it is printed upon under closely-monitored conditions to ensure that the print image is not adversely affected. Once activated, the FFM layer 124 comprises an adhesive surface having a desired open tack time, i.e., it has an adhesive surface for a controllable window of time, to accommodate subsequent lamination with the overlaminate film material 128 using conventional lamination methods. In an effort to minimize or eliminate the possibility of print image distortion when heat-activating the FFM layer, a reverse-printed overlaminate film can be used for laminating to the heat-activated FFM layer 124. Both such lamination methods, involving the step of heat-activating the overlaminate film material or the FFM material, produce an overlaminated PSA construction that does not require a PSA layer interposed between the FFM layer and the overlaminate film layer.

In an example embodiment, where a heat-activatable FFM or overlaminate film is used, it is desired that the heat-activatable material have an open tack time greater than about 0.25 seconds and less than about 20 seconds, and preferably less than about 5 seconds after activation. To reduce the open tack time during the process of laminating the prelaminate PSA construction, and thereby speed up the rate at which the construction is laminated, the activated material may be cooled before lamination by use of a conventional cooling means placed between the activation means and the lamination means. Cooling the activated material allows lamination to occur at ambient or subactivation process temperature conditions shortly after heat activation, thereby minimizing potential heat damage to the prelaminate PSA construction.

Materials useful for forming a heat-activatable FFM layer or overlaminate film include those heat-seal adhesives previously described, modified heat-seal adhesives, and delayed-action heat-seal adhesives. Preferred modified heat-seal adhesives include those heat-seal adhesives previously described that additionally include one or more plasticizers and/or tackifiers to make them behave more like PSAs during their open tack time period. An exemplary modified heat-seal adhesive is a polyamide resin formed by condensing equal molar amounts of Hystrene 3695 dimer acid available from Humco of Texarkana, Texas with hexamethylenediamine, taking 50 percent by weight of such polyamide resin and adding to it about 25 percent by weight castor bean oil, and 25 percent by weight Foral 85 rosin ester tackifier from Hercules Inc., of Wilmington, Delaware.

Delayed-action heat-seal adhesives useful for forming a heat-activatable FFM layer or overlaminate film include polymers that normally do not possess open tack, but are mixed with one or more solid plasticizer. When melted, the solid plasticizer causes the nontacky polymer to become tacky, and remains liquid for some time after cooling to provide an open tack. Suitable delayed-action heat-seal adhesives are commercially available from, for example, Kimberly-Clark, Brown Bridge Industries of Troy, Ohio under the product names 402-MC, 64-BAK, 441-BL and 70-RECA; Oliver Products Company of Grand Rapids, Michigan under its Engineered Adhesive Coated Products line; and Nashua Graphic Products of Merrimack, New Hampshire under the product names RX-1. BM-4, PBL-3, as described in U.S. Patent Nos. 2,462,029, 3,104,979, and 2,678.284, which are each herein incorporated by reference.

### Overlaminated PSA Constructions

Overlaminated PSA constructions illustrated in FIGS. 8 to 10 can be prepared according to the example process of FIG. 12 by using an overlaminated film construction comprising the second PSA layer disposed along a backside surface, i.e., a surface arranged to be laminated with an adjacent prelaminate PSA construction surface. The second PSA layer can be applied to the overlaminate film backside surface by the same techniques previously described for applying the PSA layer to form the prelaminate PSA construction. In a preferred embodiment, the second PSA layer is applied in the form of an emulsion spray. The overlaminate film construction 128 can additionally include a release liner (not shown) disposed on the PSA layer to facilitate collecting and storing the overlaminate construction in roll form after it is formed. During the laminating process, the release liner is removed from the overlaminate film construction, e.g., after the film construction is payed out from a collection roll, to expose its underlying PSA layer. The overlaminate film construction is run through roller 130, causing the overlaminate film construction PSA layer to be pressure laminated to the underlying prelaminate PSA construction surface. Alternatively, the overlaminate film 94 can be coated with a PSA layer 98 and routed for subsequent lamination with the prelaminate PSA construction 86 during the same operation without being collected, thus without the need for a release liner. In either case, the printed indicia for the completed PSA construction can be on the FFM layer surface (as shown in FIG. 8), can be reverse printed on a backside surface of the overlaminate film (as shown in FIG. 9), or can be on both the FFM layer surface and reverse printed on the overlaminate film (as shown in FIG. 10) depending on the particular label application.

FIG. 13 illustrates another example process 132 for forming an overlaminated PSA construction of this invention illustrated in FIG. 11. using the above-described prelaminate PSA construction. In such process the overlaminated PSA construction is formed by applying an overlaminate film-forming material 134 to the underlying printed surface 136 of the prelaminate PSA construction 120. The overlaminate film-forming material 134 can be applied by the same coating methods described above for applying the FFM to form the prelaminate faceless PSA construction, by routing the printed prelaminate PSA construction through a spray or coating station 138. The film-forming material can be selected from the group of materials that are capable of being dispensed in liquid form, e.g.. as a hot melt, an emulsion or aqueous dispersion, as a solvent solution, to subsequently form a continuous overlaminate film under proper conditions. Example film-forming materials include varnishes and those materials. e.g., polyamides, described above used to form the FFM of the prelaminate faceless PSA construction. Additionally, the film-forming materials can be selected to provide a degree of ultraviolet protection to the label construction if desired.

It is desired that the thickness of the overlaminate film material be sufficient to: (1) protect the underlying printed image and PSA label construction from damage caused by physical contact with adjacent objects, and from damage caused by moisture; (2) provide a sufficient degree of rigidity and stiffness to the overlaminated PSA construction to facilitate high-speed conversion and dispensing by conventional peel plate equipment; and (3) provide a desired degree of conformability to the label construction to enable use with a variety of different substrates. In an example embodiment, the overlaminate film can have a coating thickness of in the range of from about 1 to 125 mm, and preferably has a coating thickness in the range of from about 5 to 50 mm. It is to be understood that the particular overlaminate film coating thickness will vary depending on a number of factors, such as the coating thickness of the different layers used to form the prelaminate PSA construction, the types of materials selected to form the prelaminate PSA construction, the thickness of the printed indicia and type of material used to form the same, and the particular convertibility, dispensability and conformability criteria for the overlaminated PSA construction.

Further, the overlaminating film material can be selected to protect the underlying printed indicia from the effects of weather and sun exposure. For example, in applications where the PSA label construction is applied to a substrate that is exposed to the sun for extended periods of time the overlaminate film material can be selected from a material that provides a degree of ultraviolet resistance and/or that filters some of the ultraviolet rays from the underlying printing indicia to minimize fading. Another advantage of overlaminated faceless PSA constructions prepared according to principles of this invention is that the overlaminate film layer is preferably selected and used at a desired thickness to optically enhance the underlying printed indicia, e.g., making the printed indicia appear to be glossier, with a brighter hue and more brilliant color intensity.

An overlaminate film coating thickness that is less than about 1 micrometer can form an overlaminated PSA construction that may possess one or more of the following characteristics: (1) it may lack sufficient stiffness to facilitate high-speed convertibility and/or dispensability by conventional peel plate equipment; (2) it may not adequately protect the underlying printed indicia from physical contact with adjacent objects or moisture ; and (3) it may not enhance the underlying printed indicia a desired amount. An overlaminate film coating thickness that is greater than about 125 mm can form an overlaminated PSA construction that: (1) is too stiff or rigid, thus lacking a desired degree of flexibility or conformity that could cause the label to lift away from an applied substrate surface; and/or (2) may blur or adversely affect the ability to clearly view the underlying printed indicia.

PSA label constructions of this invention have a total construction thickness (not including the release liner) of in the range of from about 9 to 150 mm, and preferably in the range of from about 50 to 120 mm. Overlaminated PSA constructions having a construction thickness of less than about 9 mm can lack sufficient stiffness to enable both high-speed convertibility and dispensing using peel plate equipment, while overlaminated PSA constructions having a construction thickness of greater than about 150 mm can lack sufficient conformability to permit their use on certain applications.

Referring back to FIGS. 12 and 13, after application of the overlaminate film layer, overlaminate film construction, or overlaminate film-forming material, the overlaminated PSA construction can either be collected for conversion at a later time and/or at a different location, or can be routed to one or more converting station 140 after the printing and laminating operation. In an example embodiment, the overlaminated PSA construction is routed to a converting station 140 after lamination where it is cut and stripped by conventional converting methods, e.g., by die-cutting and matrix-stripping methods, to form a PSA label having a desired shape and size. FIGS. 12 and 13 illustrate die-cutting and matrix-stripping the overlaminate film layer, the printed indicia and underlying FFM layer, and the PSA layer of the overlaminated PSA construction at station 140 into a series of PSA labels 142 of desired shape and size, carried by the release liner 144.

A key feature of overlaminated PSA label constructions of this invention is that they are highly conformable yet sufficiently stiff to permit both high-speed converting and separation using conventional peel plate equipment for subsequent dispensing. Overlaminated PSA constructions of this invention have a Gurley stiffness in the machine direction of less than about 40 mg. For applications calling for a high degree of conformability, overlaminated PSA constructions can be designed having Gurley stiffness of less than about 20 mg, and preferably less than 10 mg, and in some instances in the range of from about 3 to 8 mg (as measured per TAPPI Gurley stiffness test T-543). It is surprising to find that overlaminated PSA constructions having a low Gurley stiffness of less than about 10 can be converted at high speeds and that die cut labels of such constructions can separate from the release liner using conventional peel plate equipment. As previously noted, for the task of applying a separated label onto a desired substrate, non-conventional dispensing equipment may be required for labels cut from low stiffness PSA constructions, e.g. PSA constructions having a Gurley stiffness of less than about 10 mg.

Overlaminated PSA label constructions of this invention can be converted by conventional die-cutting and matrix-stripping methods at web speeds that meet or exceed PSA label constructions having conventional facestocks. e.g., paper and that have Gurley a stiffness greater than 20 mg. In an example embodiment, overlaminated PSA constructions of this invention are die cut and matrix stripped at a web speed of approximately 0.75 m/s, and can be die cut and matrix stripped at web speeds up to approximately 1.5 m/s depending on a number of factors, such as the type of FFM and overlaminate film material used, the coat weight of the FFM and overlaminate film material, and the thickness and type of ink used to form the printing indicia. Generally speaking, overlaminated PSA constructions comprising higher coat weights of the FFM layer and/or overlaminate film material permit converting at greater speeds than those comprising lower coat weights of the FFM layer and/or overlaminate film material.

Overlaminated PSA label constructions of this invention having a Gurley stiffness of greater than about 10 mg are generally sufficiently stiff to allow dispensing using a peel plate or back-peel edge at high speeds, e.g., in excess of 200 pieces per minute and up to about 250 pieces per minute which corresponds to a speed of about 0.4 to 0.5 m/s. Preferably, dispensing can occur at a rate of at least 500 pieces per minute, and more preferably at 550 pieces per minute or higher.

In overlaminated PSA constructions, prepared according to principles of this invention, the overlaminate film serves to protect the underlying printed indicia and label construction from damage that can be caused by physical contact with an adjacent object. For example, when used as a label on a glass or plastic beverage container, the overlaminated film layer protects the printed indicia from being scraped or otherwise damaged by contact with adjacent bottles when packaged, stored or displayed for sale or use. Additionally, the overlaminate film layer protects the underlying printed image from damage caused by moisture or water contact, e.g., in situations where the label is used on beverage containers that are stored in ice bath before consumption.

The previously noted feature that the preferred overlaminated labels are flexible and conformable to a variety of different substrate surface configurations, allows labeling of a curved surfaces such as found on a beverage container or bottle, without lifting or other adverse consequence. The improved conformability of the overlaminated PSA construction, when compared to conventional PSA construction, is due to the design of combining a highly-conformable, thin-film faceless prelaminate PSA construction with a suitable overlaminate film material that provides sufficient stiffness to enable high speed conversion and dispensability without sacrificing conformability. Overlaminated PSA constructions of this invention are also useful, for example, as labels on glass beverage bottles and, more specifically, as pre-applied labels that are adhered to such glass bottles prior to washing/rinsing, filling and pasteurization processes. Pre-applied labels formed from PSA constructions of this invention are capable of withstanding bottle washing/rinsing, filling and pasteurization processes without lifting away from the bottle surface, without hazing or otherwise adversely affecting the optical quality of the printed image, and without displaying any other adverse consequences. The ability for PSA constructions of this invention to function as a pre-applied label without adverse consequences is surprising and unexpected given the known deficiencies of conventional PSA label constructions when placed in the same pre-applied label application.

Conventional PSA constructions, when subjected to pasteurization process, are known to peel away from the underlying substrate surface, making them unsuited for such application. Such lifting is thought due to the relatively high stiffness or rigidity of the facestock that pulls the PSA layer away from the substrate surface when the PSA warms during the pasteurization process. Overlaminated PSA constructions of this invention are particularly well suited for use in applications such as pre-applied bottle labels because of their relatively low stiffness and related enhanced conformability and PSA wettability that prevents such label lifting.

Examples of prelaminate and overlaminated PSA label constructions of this invention are as follows:

### Example 1 - Prelaminate Faceless PSA Construction (Simultaneous Coating)

A prelaminate faceless PSA construction was prepared by hot melt dual-die method by applying a PSA layer comprising H2187-01 adhesive to a 42 pound basis weight per ream Rhi-Liner 12 release liner comprising a layer of General Electric 6000 silicone releasable material. A FFM comprising a Uni-Rez 2665 polyamide resin (having a hot melt viscosity within the window set forth above) was simultaneously applied to a surface of the PSA layer. The coat weight of the PSA was about 20 g/m2, or about 20 mm thick. Five grams of Leucopure EGM UV chromophore was added to about 19 L of the polyamide resin at a blend ratio of 0.26 gram Leucopure per liter resin to permit visual observation of the FFM layer under a UV light. The polyamide resin was applied at a coat weight of about 25 g/m2, or about 25 m thick. The total thickness of the prelaminate PSA construction, excluding the release liner, was approximately 45 mm.

### Examples 2-4 - Overlaminated PSA Constructions

The prelaminate PSA construction prepared in Example 1 was printed upon by the flexo method using three printing stations and three Anilox rolls. An ultraviolet ink was used and the total ink coating thickness was approximately 10 mm. Three different overlaminated PSA constructions were prepared, each having the general construction as illustrated in FIG. 8, by laminating three different types of overlaminate film to the prelaminate construction.

In example 2, an overlaminated PSA construction was prepared by pressure laminating to the prelaminate construction an overlaminate film construction comprising an optically-transparent overlaminate film, formed from a biaxially-oriented polypropylene and having a film thickness of approximately 20 mm, and an adhesive layer having a thickness of approximately 4 mm, disposed alongside a backside surface of the overlaminate film. The adhesive layer was formed from a solvent-based or water-based adhesive commonly used for lamination in the flexible packaging industry (e.g., an adhesive used to laminate bags of chips, coffee bags, etc.). ADCOTE® adhesives, available from Morton International (Chicago, IL), are one example of flexible packaging industry adhesives.

In example 3, an overlaminated PSA construction was prepared by pressure laminating to the prelaminate construction an overlaminate film construction comprising an optically-transparent overlaminate film, formed from biaxially-oriented polypropylene and having a film thickness of approximately 25 mm, and a PSA layer in the form of a two-component laminate adhesive having a layer thickness of approximately 20 mm, disposed along a backside surface of the overlaminate film.

In example 4, an overlaminated PSA construction was prepared by pressure laminating to the prelaminate construction an overlaminate film construction comprising an optically-transparent overlaminate film, formed from biaxially-oriented polypropylene and having a film thickness of approximately 30 mm, and a PSA layer, formed from the same PSA described above for the first construction and having a layer thickness of approximately 4 mm, disposed along a backside surface of the overlaminate film.

The overlaminated PSA constructions of examples 2-4 had a total construction thickness (excluding the release liner) of approximately 79 mm, 100 mm, and 89 mm, respectively.

### Example 5 - Converting and Dispensing

Each of the three above-described example overlaminated PSA constructions were converted by die-cutting and matrix-stripping method at a web speed of approximately 160 feet per minute. Each of the example overlaminated PSA labels were dispensed using a Dispensa-Matic Model U-45 peel plate dispenser, and were tested for Gurley stiffness. The example 2, 3 and 4 overlaminated PSA constructions had a Gurley stiffness of approximately 4.2, 6 and 7.8 mg, respectively. Release values for the example 3 overlaminated PSA construction were also obtained (using ASTM D-5375-93, with a TLMI Lab Master as the test apparatus) using a 50 x 254 mm sample by stripping the carrier away from the facestock at an angle of approximately 90° and at peel rates of approximately 0.3, 7.6 and 30.5 m/min. The example 3 overlaminated PSA construction was found to have release values of 18, 53 and 63 grams/51mm width at 0.3, 7.6 and 30.5 m/min. respectively. Release values for conventional PSA constructions are known to be greater than about 80 grams/51mm width. It is theorized that the relatively low release force displayed by overlaminated PSA constructions of this invention contribute to the dispensability of the overlaminated PSA label, allowing the relatively low stiffness construction to be dispensed at high speeds using peel plate equipment.

### Example 6 - Pasteurization Testing

Overlaminated PSA constructions of this invention, prepared according to Examples 2 and 4 above, were formed into labels and pre-applied to 590 mL glass beverage bottles. The labeled bottles were subjected to pasteurization conditions by placing the labeled bottles in a circulating heated water bath maintained at approximately 73°C for a period of approximately 15 minutes, after which time the bottles were removed from the water bath for inspection. The labels were inspected for lifting and optical clarity, and displayed no signs of lifting or haziness both immediately after being removed from the bath, and after being removed for one entire day. Pre-applied PSA bottle labels produced from examples 2 and 4 overlaminated PSA constructions were also subjected to water spray pasteurization testing, in which hot water at a temperature of approximately 65°C was sprayed onto the label for a period of approximately two hours. The labels showed no signs of lifting or hazing under these testing conditions.

### Example 7 - Battery Labels

Overlaminated PSA construction of this invention can also be used to form labels for use on dry cell batteries, such as those used to power flashlights, tools, toys and the like. Such batteries come in the following popular sizes: "AA", "AAA", "C", "D" and "9 volt". PSA "single ply" constructions that are known to be used in such battery applications are described in U.S. Patent No. 5,747,192, which is incorporated herein by reference. Sample "two ply" battery labels were produced according to the present invention using a PSA layer comprising H2187-01 adhesive coated onto a 42 pound basis weight per ream Rhi-Liner 12 release liner comprising a layer of General Electric 6000 silicone releasable material. A FFM comprising a Uni-Rez 2665 polyamide resin was simultaneously coated onto the liner to create the continuous film layer, and this was overlaminated with a 1 mil PET film. Unprinted die cut, matrix stripped battery labels produced from this material were measured to have the "shrink back" properties needed to label cylindrical batteries (shrink back is discussed in the '192 Patent). Further, the FFM was found to be amenable to printing with conventional metallized battery graphics.

### Examples 8 and 9 Prelaminate Faceless PSA Construction (Sequential Coating)

In example 8, a prelaminate faceless PSA construction was prepared by sequential coating of a PSA onto a paper liner; drying the PSA; followed by extrusion coating of a polypropylene FFM onto the dried PSA surface at a later time. The liner was a 42 pound basis weight per ream Rhi-Liner 12 release liner with a layer of General Electric 6000 silicone releasible material. The emulsion PSA was one disclosed in U.S. Patent No. 5.221,706. which is incorporated herein by reference, at a coat weight of 21 g/m². The PSA was coating onto the liner, dried, and the PSA coated liner collected in a roll. Later the roll was unwound, passed by an extrusion coating station, and rewound, at a line speed of 80 feet pre minute. A 1 mil coat weight layer of Huntsman polypropylene P9H8M-015 (having a melt flow rate of 53, a melt temperature of about 540°F, and available from Huntsman Chemical in Odessa, Texas) was extrusion coated onto the adhesive surface using a 30 inch die supplied by a 2.5 inch extruder. The die temperature was 580°F. The resulted in a continuous, imperforate coating or polypropylene.

In example 9, example 8 was repeated with the following change. The paper liner was replaced by a polyethylene terepthalate release liner from Hoechst Diafoil Company, Greer South Carolina. The FFM of the polypropylene was coated at a coat weight of about 1.3 mil. Again, a continuous imperforate film ofP9H8M-015 polypropylene was formed on the adhesive coated liner.

Although limited embodiments of overlaminated PSA constructions and methods for making the same according to principles this invention have been described herein, many modifications and variations will be apparent to those skilled in the art. Accordingly, it is to be understood that, within the scope of the appended claims, overlaminated PSA constructions of this invention may be prepared other than as specifically described herein.

## Claims

1. A pressure-sensitive adhesive label construction comprising a removable flexible substrate (30) having a release surface (32), **characterized in that** a layer of pressure-sensitive adhesive (34) is disposed on the release surface having a Brookfield viscosity in the range of from about 5 Pa * s to 40 Pa * s at a temperature of approximately 190°C and within a shear rate range of 1,000 to 10.000 sec⁻¹; and a continuous film layer (36) disposed on the layer of pressure-sensitive adhesive that renders the pressure-sensitive adhesive nonblocking and that has an application viscosity range that is within a factor of from 0.07 to 15 of an application viscosity range of the pressure-sensitive adhesive within a shear rate of from about 1,000 to 10,000 sec⁻¹ at a given temperature, wherein the combined flexible substrate, layer of pressure-sensitive adhesive, and continuous film layer provide a die-cuttable and matrix strippable construction.

2. The construction as recited in claim 1. further comprising an overlaminate film layer (98) disposed over a surface of the continuous film later.

3. The construction as recited in claim 2, further comprising a printed indicia (100) interposed between the continuous film and overlaminate film layers.

4. The construction as recited in claim 2, wherein the construction has a total thickness, excluding the flexible substrate, in the range of from 50 to 120 micrometers;

5. The construction as recited in claim 2, wherein the construction has a Gurley stiffness of less than about 20 mg.

6. The construction as recited in claim 2, further comprising a layer of adhesive (102) material interposed between the continuous film layer and the overlaminate film layer

7. The construction as recited in claim 1, wherein the continuous film layer and layer of pressure-sensitive adhesive are deposited simultaneously.

8. The construction as recited in claim 1, wherein the continuous film layer and layer of pressure-sensitive adhesive are deposited sequentially.

9. The construction as recited in claim 1, wherein the construction has a total thickness, excluding the flexible substrate, in the range of from 20 to 70 micrometers.

10. The construction as recited in claim 1, wherein the continuous film layer is formed by depositing a non-preformed film onto the pressure-sensitive adhesive.

11. A method for making a pressure-sensitive adhesive construction **characterized by** comprising the steps of:
depositing a layer of pressure-sensitive adhesive (34) directly onto a release surface (32) of a flexible substrate (30), the layer of pressure-sensitive adhesive having a Brookfield viscosity in the range of from about 5 Pa * s to 40 Pa * s at a temperature of approximately 190°C and within a shear rate range of 1,000 to 10,000 sec⁻¹ and
depositing a layer of film-forming material (36) directly onto a surface of the layer of pressure-sensitive adhesive to form a continuous film thereon;
wherein the combined flexible substrate, layer of pressure-sensitive adhesive and continuous film layer provide a die-cuttable and matrix strippable construction.

12. The method according to claim 11, wherein the layer of film-forming material used to form the continuous film layer has an application viscosity range that is within a factor of from 0.07 to 15 of an application viscosity range of the pressure-sensitive adhesive within a shear rate of from about 1,000 to 10,000 s⁻¹ at a given temperature.

13. The method according to claim 11. further comprising applying an overlaminate (98) film layer over a surface of the continuous film layer.

14. The method as recited in claim 13, wherein the overlaminate film layer is formed by depositing a non-preformed film material onto the surface of the continuous film layer.

15. The method as recited in claim 13, further comprising applying a printing indicia (100) between the continuous film layer and the overlaminate film layer.

16. The method as recited in claim 11, wherein the film-forming material is applied in the form of a non-preformed film.

17. The method as recited in claim 11, wherein the steps of depositing the layer of pressure-sensitive adhesive and depositing the layer of film-forming material are conducted simultaneously.

18. The method as recited in claim 11, wherein the steps of depositing the layer of pressure-sensitive adhesive and depositing the layer of film-forming material are conducted sequentially.

## Patentansprüche

1. Druckempfindliche Aufkleberkonstruktion umfassend ein entfembares flexibles Substrat (30) mit einer Ablöseoberfläche (32), **dadurch gekennzeichnet, dass** eine Schicht aus druckempfindlichem Klebstoff (34) auf der Ablöseoberfläche aufgebracht ist, der eine Brookfield-Viskosität im Bereich von etwa 5 Pa s bis 40 Pa s bei einer Temperatur von etwa 190°C und innerhalb einer Scherrate von 1000 bis 10000 s⁻¹ aufweist; und eine auf der Schicht aus dem druckempfindlichen Klebstoff aufgebrachte durchgängige Filmschicht (36), die den druckempfindlichen Klebstoff nicht blockierend macht und einen Anwendungsviskositätsbereich hat, der innerhalb eines Faktors von 0,07 bis 15 eines Anwendungsviskositätsbereichs des druckempfindlichen Klebstoffs innerhalb einer Scherrate von etwa 1000 bis 10000 s⁻¹ bei einer gegebenen Temperatur liegt, wobei die Vereinigung aus dem flexiblen Substrat, der Schicht aus druckempfindlichem Klebstoff und der durchgängigen Filmschicht eine stanzbare und ablösbare Matrix-Konstruktion bereitstellt.

2. Konstruktion nach Anspruch 1, ferner umfassend eine überlaminierte Filmschicht (98), die über einer Oberfläche der durchgängigen Filmschicht angeordnet ist.

3. Konstruktion nach Anspruch 2, ferner umfassend eine gedruckte Markierung (100), die zwischen den durchgängigen Film- und überlaminierten Filmschichten angebracht ist.

4. Konstruktion nach Anspruch 2, wobei die Konstruktion eine Gesamtdicke, ausschließlich des flexiblen Substrats, im Bereich von 50 bis 120 Mikrometer aufweist.

5. Konstruktion nach Anspruch 2, wobei die Konstruktion eine Gurley-Steifheit von weniger als 20 mg hat.

6. Konstruktion nach Anspruch 2, ferner umfassend eine Schicht aus Klebstoff (102) -Material, die zwischen der durchgängigen Filmschicht und der überlaminierten Filmschicht angeordnet ist.

7. Konstruktion nach Anspruch 1, wobei die durchgängige Filmschicht und die Schicht aus druckempfindlichem Klebstoff gleichzeitig aufgebracht werden.

8. Konstruktion nach Anspruch 1, wobei die durchgängige Filmschicht und die Schicht aus druckempfindlichem Klebstoff der Reihe nach aufgebracht werden.

9. Konstruktion nach Anspruch 1, wobei die Konstruktion eine Gesamtdicke, ausschließlich des flexiblen Substrats, im Bereich von 20 bis 70 Mikrometer aufweist.

10. Konstruktion nach Anspruch 1, wobei die durchgängige Filmschicht durch das Aufbringen eines nicht vorgeformten Films auf den druckempfindlichen Klebstoff gebildet ist.

11. Verfahren zur Herstellung einer druckempfindlichen Aufkleberkonstruktion, bei dem man
eine Schicht aus druckempfindlichem Klebstoff (34) direkt auf eine Ablöseoberfläche (32) eines flexiblen Substrats (30) aufbringt und die Schicht aus druckempfindlichem Klebstoff eine Brookfield-Viskosität im Bereich von etwa 5 Pa s bis 40 Pa s bei einer Temperatur von etwa 190°C und innerhalb einer Scherrate von 1000 bis 10000 s⁻¹ aufweist, und
eine Schicht aus Film bildendem Material (36) direkt auf eine Oberfläche der Schicht aus druckempfindlichem Klebstoff aufbringt, um darauf einen durchgängigen Film zu bilden;
wobei die Vereinigung aus dem flexiblen Substrat, der Schicht aus druckempfindlichem Klebstoff und der durchgängigen Filmschicht eine stanzbare und ablösbare Matrix-Konstruktion bereitstellt,

12. Verfahren nach Anspruch 11, wobei die Schicht aus dem Film bildenden Material, die verwendet wird, um die durchgängige Filmschicht zu bilden, einen Anwendungsviskositätsbereich hat, der innerhalb eines Faktors von 0,07 bis 15 eines Anwendungsviskositätsbereichs des druckempfindlichen Klebstoffs innerhalb einer Scherrate von etwa 1000 bis 10000 s⁻¹ bei einer gegebenen Temperatur liegt.

13. Verfahren nach Anspruch 11, bei dem man ferner eine überlaminierte Filmschicht (98) über einer Oberfläche der durchgängigen Filmschicht aufbringt.

14. Verfahren nach Anspruch 13, wobei die überlaminierte Filmschicht gebildet wird, indem man ein nicht vorgeformtes Filmmaterial auf die Oberfläche der durchgängigen Filmschicht aufbringt.

15. Verfahren nach Anspruch 13, bei dem man ferner eine gedruckte Markierung (100) zwischen der durchgängigen Filmschicht und der überlaminierten Filmschicht aufbringt.

16. Verfahren nach Anspruch 11, wobei das Film bildende Material in Form eines nicht vorgeformten Films aufgebracht wird.

17. Verfahren nach Anspruch 11, wobei die Schritte, bei denen die Schicht aus druckempfindlichem Klebstoff aufgebracht wird und die Schicht aus Film bildendem Material aufgebracht wird, gleichzeitig erfolgen.

18. Verfahren nach Anspruch 11, wobei die Schritte, bei denen die Schicht aus druckempfindlichem Klebstoff aufgebracht wird und die Schicht aus Film bildendem Material aufgebracht wird, der Reihe nach erfolgen.

## Revendications

1. Construction d'étiquette autocollante comprenant un substrat flexible amovible (30) ayant une surface de séparation (32), **caractérisée en ce qu'**une couche d'adhésif sensible à la pression (34) est disposée sur la surface de séparation ayant une viscosité Brookfield dans le domaine d'environ 5 Pa.s à 40 Pa.s à une température d'environ 190° C et ayant un taux de cisaillement dans un domaine de 1000 à 10 000⁻¹ ; et une couche de film continu (36) disposée sur la couche d'adhésif sensible à la pression qui rend l'adhésif sensible à la pression non bloquant et qui possède une gamme de viscosité d'application qui est dans un facteur de 0,07 à 15 d'une gamme de viscosité d'application de l'adhésif sensible à la pression avec un taux de cisaillement d'environ 1000 à 10 000⁻¹ à une température donnée, dans laquelle le substrat flexible, la couche d'adhésif sensible à la pression, et la couche de film continu combinés fournissent une construction découpable à l'emporte-pièce et à matrice décollable.

2. Construction selon la revendication 1, comprenant en outre une couche de film stratifié supérieure (98) disposée sur une surface de la couche de film continu.

3. Construction selon la revendication 2, comprenant en outre un motif imprimé (100) intercalé entre le film continu et des couches de film stratifiés supérieures.

4. Construction selon la revendication 2, dans laquelle la construction possède une épaisseur totale, à l'exclusion du substrat flexible, dans le domaine de 50 à 120 µm.

5. Construction selon la revendication 2, dans laquelle la construction possède une rigidité Gurley inférieure à environ 20 mg.

6. Construction selon la revendication 2, comprenant en outre une couche de matériau adhésif (102) intercalée entre la couche de film continu et la couche de film stratifié supérieure.

7. Construction selon la revendication 1, dans laquelle la couche de film continu et la couche d'adhésif sensible à la pression sont déposées simultanément.

8. Construction selon la revendication 1, dans laquelle la couche de film continu et la couche d'adhésif sensible à la pression sont déposées séquentiellement.

9. Construction selon la revendication 1, dans laquelle la construction possède une épaisseur totale, à l'exclusion du substrat flexible, dans le domaine de 20 à 70 µm.

10. Construction selon la revendication 1, dans laquelle la couche de film continu est formée en déposant un film non préformé sur l'adhésif sensible à la pression.

11. Procédé de fabrication d'une construction adhésive sensible à la pression **caractérisé en ce qu'**elle comprend les étapes suivantes :
dépôt d'une couche d'adhésif sensible à la pression (34) directement sur une surface de séparation (32) d'un substrat flexible (30), la couche d'adhésif sensible à la pression ayant une viscosité Brookfield dans le domaine d'environ 5 Pa.s à 40 Pa.s à une température d'environ 190° C et ayant un taux de cisaillement dans un domaine de 1000 à 10 000⁻¹ ; et
dépôt d'une couche de matériau filmogène (36) directement sur une surface de la couche d'adhésif sensible à la pression pour former un film continu sur celle-ci;
dans lequel le substrat flexible, la couche d'adhésif sensible à la pression et la couche de film continu, combinés fournissent une construction découpable à l'emporte-pièce et à matrice décollable.

12. Procédé selon la revendication 11, dans lequel la couche de matériau filmogène utilisée pour former la couche de film continu possède une gamme de viscosité d'application qui est dans un facteur de 0,07 à 15 d'une gamme de viscosité d'application de l'adhésif sensible à la pression d'environ 1000 à 10 000⁻¹ à une température donnée.

13. Procédé selon la revendication 11, comprenant en outre l'application d'une couche de film stratifié supérieure (98) sur une surface de la couche de film continu.

14. Procédé selon la revendication 13, dans lequel la couche de film stratifié supérieure est formée en déposant un matériau de film non préformé sur la surface de la couche de film continu.

15. Procédé selon la revendication 13, comprenant en outre l'application d'un motif d'impression (100) entre la couche de film continu et la couche de film stratifié supérieure.

16. Procédé selon la revendication 11, dans lequel le matériau filmogène est appliqué sous la forme d'un film non préformé.

17. Procédé selon la revendication 11, dans lequel les étapes de dépôt de la couche d'adhésif sensible à la pression et de dépôt de la couche de matériau filmogène sont réalisées simultanément.

18. Procédé selon la revendication 11, dans lequel les étapes de dépôt de la couche d'adhésif sensible à la pression et de dépôt de la couche de matériau filmogène sont réalisées séquentiellement.
